(19) **Europäisches Patentamt / European Patent Office / Office européen des brevets**

(11) **EP 2 226 659 A1**

(12) **EUROPEAN PATENT APPLICATION**
published in accordance with Art. 153(4) EPC

(43) Date of publication:
**08.09.2010 Bulletin 2010/36**

(51) Int Cl.:
***G02B 6/122*** *(2006.01)*

(21) Application number: **08864754.0**

(22) Date of filing: **22.12.2008**

(86) International application number:
**PCT/JP2008/073312**

(87) International publication number:
**WO 2009/081901 (02.07.2009 Gazette 2009/27)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.12.2007 JP 2007331004**

(71) Applicant: **Fujikura, Ltd.**
**Tokyo 135-8512 (JP)**

(72) Inventors:
- **GUAN, Ning**
  **Sakura-shi**
  **Chiba 285-8550 (JP)**
- **OGAWA, Kensuke**
  **Sakura-shi**
  **Chiba 285-8550 (JP)**

(74) Representative: **Cabinet Plasseraud**
**52, rue de la Victoire**
**75440 Paris Cedex 09 (FR)**

(54) **OPTICAL WAVEGUIDE, METHOD FOR MANUFACTURING THE OPTICAL WAVEGUIDE, AND OPTICAL DEVICE PROVIDED WITH THE OPTICAL WAVEGUIDE**

(57)     OPTICAL WAVEGUIDE, METHOD FOR MANUFACTURING THE OPTICAL WAVEGUIDE, AND OPTICAL DEVICE PROVIDED WITH THE OPTICAL WAVEGUIDE

An optical waveguide comprising a cladding and a core embedded in the cladding. An equivalent refractive index of the core changes unevenly along a light propagation direction by changing physical dimensions of the core.

FIG. 1

**Description**

[Technical Field]

The present invention relates to a reflection-type optical waveguide, a method for manufacturing the optical waveguide, and an optical device including the optical waveguide. This device can be used for an optical fiber communication network or the like.
Priority is claimed on Japanese Patent Application 2007-331004 filed December 21, 2007, the content of which is incorporated herein by reference.

[Background Art]

In optical communication, widening the bandwidth and increasing the speed of transmission of dense wavelength-division multiplexing (DWDM) is rapidly promoted. In order to perform high-speed transmission, as this transmission line, it is desirable to use an optical fiber in which not only the wavelength dispersion is as small as possible in the transmission bandwidth, but the wavelength dispersion does not become zero in order to suppress non-linear effects. However, optical fibers that are already extensively installed are frequently used in a wavelength region in which the dispersion is great.
For example, a standard single-mode fiber (S-SMF) that has zero dispersion around the wavelength of 1.3 $\mu$m is used in the band of wavelength 1.53 to 1.63 $\mu$m as a result of the practical implementation of erbium-doped optical fiber amplifiers. A dispersion shifted fiber (DSF) that shifts the zero dispersion to the vicinity of wavelength 1.55 $\mu$m is used not only in the C band, but also in the S band and L band. In addition, there are various types of non-zero dispersion shifted fiber (NZ-DSF) that do not enter zero dispersion at a wavelength of 1.55 $\mu$m. In the case of using these optical fibers in DWDM, the compensation technique of the residual dispersion over a wide wavelength range is important.
Various techniques are used for dispersion compensation. Among them, dispersion compensation that uses a dispersion compensation fiber (DCF) is most implemented technique (for example, refer to Patent Documents 1 and 2). In DCF, the refractive index distribution of the optical fiber is controlled so that the desired dispersion compensation amount is obtained. However, usually the DCF must be of a length that is equivalent to the optical fiber that is the target of compensation. For that reason, in the case of producing this DCF as a module, not only is a large installation space required, but the transmission losses also cannot be ignored. In addition, it is necessary to perform accurate control of the refractive index distribution in the DCF, and so not only is there the aspect of the fabrication being difficult, but it is often difficult to satisfy the dispersion compensation amount that is required in a wide band.
Fiber Bragg grating (FBG) is one of the techniques often used for dispersion compensation (for example, refer to Patent Document 3). In FBG, a fiber is irradiated by UV light to alter the refractive index of the fiber core, and by forming a grating due to a variation in the refractive index, dispersion compensation is performed. Thereby, the realization of a miniature device for dispersion compensation becomes possible, but control of the change of the refractive index is difficult. Moreover, since there is a limit to the change in the refractive index of a fiber, there is a limit to the dispersion compensation characteristics that can be realized. Moreover, there is a limit to the miniaturization and large-scale production of a device that employs an FBG.
A planar lightwave circuit (PLC) can perform dispersion compensation using an optical path that is constructed on a plane. A lattice-form PLC is one example thereof (for example, refer to Non-Patent Document 1). However, a lattice-form PLC controls dispersion by cascaded coupled resonators, and is based on the principle of a digital infinite impulse response (IIR). For that reason, the dispersion amount that can be realized is limited.
A set-up has also been considered that demultiplexes with an arrayed waveguide grating (AWG), adding a path difference to each channel, and after adjusting the delay time, again multiplexes with a collimator lens (for example, Patent Document 4). However, in this method, the structure is complex, and not only is the fabrication difficult, but the space that is required is large.
A virtually imaged phased array (VIPA) -type dispersion compensator is a dispersion compensation device that includes a wavelength dispersion element (VIPA plate) that consists of both sides of a thin plate being coated with a reflective film, and a reflective mirror (for example, refer to Patent Document 6). This device adjusts the dispersion with a three-dimensional structure. For that reason, this device is structurally complex, and extremely high precision is required for fabrication.
In DWDM, various types of fiber amplifier are used across a wideband. For example, the amplification characteristics of a fiber amplifier, such as an erbium doped-fiber amplifier, have wavelength-dependent characteristics. Consequently, a different gain is obtained at a different wavelength (for example, refer to Non-Patent Document 2). This phenomenon is the cause of deterioration in the S/N ratio of the transmitted signal. In order to improve such S/N ratio degradation, the same gain is required in all channels which are used. In particular, in DWDM, since a broad wavelength range is used, a technique using a gain equalizer that flattens a gain in the wavelength range is important.

The gain equalizer may use various techniques such as FBG or AWG as described above, or liquid crystals or the like. In a technique using FBG, control of the refractive index change is difficult as described above and there is a limit to the change of the refractive index. Therefore, there is a limit to flat the gain in broad wavelength range. In a technique using AWG, wave branching is executed in the AWG, gain is controlled for each channel, and then the gain is flattened by multiplexing again. However, AWG not only has manufacturing difficulties and complicated preparation but also a large space is required. Furthermore, although a gain equalizer exists which combines AWG with a phase shifter formed from liquid crystals such as $LiNbO_3$, the configuration thereof is complicated.

In a technique using liquid crystals, a voltage is applied to the liquid crystals to thereby change the direction of polarization of the molecules in the liquid crystal and control the attenuation of the light passing through the liquid crystals. However this method requires light to be branched in a space and therefore the structure of the apparatus is complicated.

Furthermore, in DWDM, communications are executed in a plurality of channels across a wide band and add/ drop of channels or application of branching and multiplexing are well-executed. As a result, a filter, or a filter bank that filters the plurality of channels is required.

A variety of techniques may be used in the filter. Techniques employing a fiber coupler are most frequently applied of such techniques (for example, refer to Non-Patent Document 3). However application of this technique to a broad wavelength band is difficult and selective filtering is not possible.

Furthermore, in the same manner as the dispersion compensation described above, although a technique using FBG is available, since control of refractive index variation is difficult and there is a limit to the variation to the fiber refractive index. Therefore, there is a limit to the filter characteristics that can be realized. Although there is a technique using AWG, in addition to manufacturing difficulties and complicated preparation, a large space is required. Furthermore there is a large loss during filtering.

[Patent Document 1] Japanese Patent No. 3857211
[Patent Document 2] Japanese Patent No. 3819264
[Patent Document 3] Japanese Patent Application, First Publication No. 2004-325549
[Patent Document 4] Japanese Patent No. 3852409
[Patent Document 5] Japanese Patent Application, First Publication No. 2005-275101
[Non-Patent Document 1] K. Takiguchi, et. al, "Dispersion slope equalizer for dispersion shifted fiber using a lattice-form programmable optical filter on a planar lightwave circuit," J. Lightwave Technol., pp. 1647-1656, vol. 16, no. 9, 1998
[Non-Patent Document 2] H. Masuda, et. al, "Design and spectral characteristics of gain- flattened tellurite-based fiber Raman amplifies," J. Lightwave Technol., pp. 504-515, vol. 24, no. 1, 2006
[Non-Patent Document 3] K. Morishita, et. al, "Fused fiber couplers made insensitive by the glass structure change, " J. Lightwave Technol., pp. 1915-1920, vol. 26, no. 13, 2008

[Disclosure of the Invention]

[Problem to be Solved by the Invention]

When executing DWDM, problems associated with conventional techniques described above are as follows.

1. Dispersion compensation that uses DCF uses long fibers, and so the required space is large and miniaturization is difficult. Also, there are limits to the dispersion compensation characteristics that can be realized.
2. When using FBG, there is a limit to the changes of the refractive index of the optical fiber. As a result, there is a limit to the dispersion compensation characteristics, the flattening of the gain or the filter characteristics that can be realized. Even when FBG is repeatedly applied, the same results are obtained.
3. In dispersion compensation that uses lattice-form PLCs, the dispersion compensation amount that can be realized is small.
4. In the case of using AWG, the structure is complicated, and so fabrication is difficult and costly. Furthermore a large space is required, and downsizing of the device is difficult.
5. A VIPA-type dispersion compensator has a complicated structure, and so fabrication is difficult and costly.
6. The apparatus structure of a gain equalizer using liquid crystals is complicated. As a result, fabrication is difficult and costly.

In other words, when DWDM is executed in relation to an optical waveguide mounted on a dispersion compensation apparatus, a gain equalizer, a filter or the like, there is a need for the development of an optical waveguide having desired dispersion characteristics, wavelength characteristics and the like so that application even to a wide wavelength range is possible.

The present invention was achieved in view of the above circumstances, and has as its object to provide an optical waveguide that can simply control the change of a refractive index, and can be fabricated easily and at a low cost.

[Means for Solving the Problem]

The present invention adopts the followings in order to solve the aforementioned issues and achieve the above object.

(1) An optical waveguide according to the present invention comprises a cladding and a core embedded in the cladding. An equivalent refractive index of the core changes unevenly along a light propagation direction by changing physical dimensions of the core.

(2) A width of the core may be unevenly distributed along the light propagation direction.

(3) The width of the core may be unevenly distributed along the light propagation direction so that both sides in the width direction of the core become symmetrical from a center of the core.

(4) The width of the core may be unevenly distributed along the light propagation direction so that both sides in the width direction of the core become asymmetrical from a center of the core.

(5) The width of the core may be unevenly distributed along the light propagation direction on one side only among both sides in the width direction of the core from a center of the core.

(6) The core may be provided in a linear manner.

(7) The core may be provided in a meandering manner.

(8) An equivalent refractive index distribution of the core along the light propagation direction of the waveguide may be designed by a design method, the design method comprises: solving an inverse scattering problem that numerically derives a potential function from the spectrum data of a reflection coefficient using a Zakharov-Shabat equation; and estimating a potential for realizing a desired reflection spectrum from a value obtained by the inverse scattering problem.

(9) The equivalent refractive index distribution of the core along the light propagation direction of the waveguide may be designed by: reducing to a Zakharov-Shabat equation having a potential that is derived from a differential of a logarithm of the equivalent refractive index of the optical waveguide, using a wave equation that introduces a variable of the amplitude of the electric power wave that propagates at the front and rear of the optical waveguide, and solving as an inverse scattering problem that numerically derives a potential function from spectrum data of a reflection coefficient; estimating a potential for realizing a desired reflection spectrum from a value obtained by the inverse scattering problem; finding the equivalent refractive index based on the potential; and calculating a width distribution of the core along the light propagating direction of the optical waveguide from the relationship between a predetermined thickness of the core, the equivalent refractive index, and the dimensions of the core that are found in advance.

(10) An optical device of the present invention comprises an optical waveguide according to above mentioned (1). One end of the optical waveguide is a transmitting end, and the other end of the optical waveguide is a reflecting end. The transmitting end is terminated with a non-reflecting end. The optical output is taken out via a circulator or a directional coupler at the reflecting end.

(11) The optical device may be an optical waveguide-type wavelength dispersion compensation device.

(12) The optical waveguide may have a characteristic in which, with a central wavelength $\lambda_C$ in a range of 1280 nm $\leq \lambda_C \leq$ 1320 nm and 1490 nm $\leq \lambda_C \leq$ 1613 nm, and an operating band $\Delta BW$ in the range of 0.1 nm $\leq \Delta BW \leq$ 40 nm, a dispersion (D) is in a range of -1,500 ps/nm $\leq D \leq$ 2,000 ps/nm, and a relative dispersion slope (RDS) is in a range of -0.1 nm$^{-1} \leq$ RDS $\leq$ 0.1 nm$^{-1}$.

(13) The optical device may be a gain equalizer.

(14) The optical device may be a filter

(15) The optical waveguide may be divided into a plurality of channels, and light in a desired wavelength band is reflected by each channel.

(16) A group delay may differ for each channel.

(17) A method for manufacturing an optical waveguide according to above mentioned (1), the method of the present invention comprises: providing a lower cladding layer of an optical waveguide; providing a core layer with a refractive index that is greater than the lower cladding layer on the lower cladding layer; forming the core by applying a processing that, in the core layer, leaves a predetermined core shape designed so that an equivalent refractive index of the core changes unevenly along a light propagation direction and removes the other portions; and providing an upper cladding layer to cover the core.

[Effects of the Invention]

The optical waveguide disclosed in the aforementioned (1) has an equivalent refractive index in the core that is embedded in the cladding that changes unevenly along the light propagating direction. Thus the degree of variability in the equivalent refractive index is large in comparison to FBG or the like and thereby facilitates fine and accurate control. Furthermore since the structure is not complicated, mass-production using known manufacturing processes is enabled and thereby reduces associated costs.

According to the optical device (wavelength dispersion compensation optical device for an optical waveguide) disclosed in aforementioned (11), since the device is provided with the optical waveguide according to the present invention, the device enables downsizing in comparison to conventional techniques that use a dispersion compensation fiber or the like, and enables a reduction in the installation space. Furthermore, in comparison to conventional techniques using FBG excellent dispersion compensation characteristics are obtained including an increase in the realized dispersion compensation characteristics. In addition, the optical device has a structure that can be manufactured simply and at a low cost compared to a dispersion compensation device such as PLC, or VIPA, or AWG or the like.

According to the optical device (gain equalizer) described in aforementioned (14), since the device is provided with the optical waveguide as stated in (1) above, the device enables flattening of the gain in a wide wavelength range in comparison to flattening gain using a conventional FBG technique. Consequently, degradation of the S/N ratio in the transmitted signal can be reduced. Furthermore since the structure is simple in comparison to AWG or the like, manufacturing costs can be reduced.

According to the optical device (filter) disclosed in aforementioned (15), since the device is provided with the optical waveguide as stated in (1) above, the device enables selective filtering even in a broad wavelength band. Furthermore since the structure is simple in comparison to AWG or the like, manufacturing costs can be reduced.

According to method for an optical device disclosed in aforementioned (19), as stated above, it is possible to manufacture efficiently and at low cost an optical waveguide having desired dispersion compensation characteristics, wavelength characteristics and the like.

[Brief Description of the Drawings]

FIG. 1 is a schematic perspective view showing the structure of NPWG according to an embodiment of an optical waveguide of the present invention.

FIG. 2A is a schematic plan view showing an example of a distribution shape of a core width.

FIG. 2B is a schematic plan view showing another example of a distribution shape of the core width.

FIG. 3 is a schematic plan view showing an example of the core in a meandering shape.

FIG. 4 shows the configuration of an embodiment of an optical waveguide-type wavelength dispersion compensation device according to the present invention.

FIG. 5 is a graph showing a potential distribution of NPWG according to an example 1.

FIG. 6 is a graph showing group delay characteristics of NPWG according to the example 1.

FIG. 7 is a graph showing reflectance characteristics of NPWG according to the example 1.

FIG. 8 is a graph showing a relationship between core width and equivalent refractive index at a wavelength of 1550 nm when a core is used in which $h_3 = 6 \mu$m and a relative refractive index difference $\Delta = 0.6\%$.

FIG. 9 is a graph showing a core width distribution of NPWG according to the example 1.

FIG. 10 is a graph showing a distribution of an equivalent refractive index of NPWG according to the example 1.

FIG. 11 is a graph showing a distribution of a core width of NPWG when using a high initial refractive index in NPWG according to the example 1.

FIG. 12 is a graph showing an equivalent refractive index distribution of NPWG when using a high initial refractive index in NPWG according to the example 1.

FIG. 13 is a graph showing a potential distribution of NPWG according to an example 2.

FIG. 14 is a graph showing group delay characteristics of NPWG according to the example 2.

FIG 15 is a graph showing reflectance characteristics of NPWG according to the example 2.

FIG. 16 is a graph showing a distribution of a core width of NPWG according to the example 2.

FIG. 17 is a graph showing a distribution of an equivalent refractive index of NPWG according to the example 2.

FIG. 18 is a graph showing a potential distribution of NPWG according to an example 3.

FIG. 19 is a graph showing group delay characteristics of NPWG according to the example 3.

FIG. 20 is a graph showing reflectance characteristics of NPWG according to the example 3.

FIG. 21 is a graph showing a distribution of a core width of NPWG according to the example 3.

FIG. 22 is a graph showing a distribution of an equivalent refractive index of NPWG according to the example 3.

FIG. 23 is a graph showing a potential distribution of NPWG according to an example 4.

FIG. 24 is a graph showing group delay characteristics of NPWG according to the example 4.

FIG. 25 is a graph showing reflectance characteristics of NPWG according to the example 4.

FIG. 26 is a graph showing a distribution of a core width of NPWG according to the example 4.

FIG. 27 is a graph showing a distribution of an equivalent refractive index of NPWG according to the example 4.

FIG. 28 is a graph showing a potential distribution of NPWG according to an example 5.

FIG. 29 is a graph showing group delay characteristics of NPWG according to the example 5.

FIG. 30 is a graph showing reflectance characteristics of NPWG according to the example 5.

FIG. 31 is a graph showing a distribution of a core width of NPWG according to the example 5.

FIG. 32 is a graph showing a distribution of an equivalent refractive index of NPWG according to the example 5.

FIG. 33 is a graph showing a potential distribution of NPWG according to an example 6.

FIG. 34 is a graph showing group delay characteristics of NPWG according to the example 6.

FIG. 35 is a graph showing reflectance characteristics of NPWG according to the example 6.

FIG. 36 is a graph showing a distribution of a core width of NPWG according to the example 6.

FIG. 37 is a graph showing a distribution of an equivalent refractive index of NPWG according to the example 6.

FIG. 38 is a graph showing group delay characteristics of NPWG according to an example 7.

FIG. 39 is a graph showing a potential distribution of NPWG according to an example 8.

FIG. 40 is a graph showing group delay characteristics of NPWG according to the example 8.

FIG. 41 is a graph showing reflectance characteristics of NPWG according to the example 8.

FIG. 42 is a graph showing a distribution of a core width of NPWG according to the example 8.

FIG. 43 is a graph showing a distribution of an equivalent refractive index of NPWG according to the example 8.

FIG. 44 is a graph showing a potential distribution of NPWG according to an example 9.

FIG. 45 is a graph showing group delay characteristics of NPWG according to the example 9.

FIG. 46 is a graph showing reflectance characteristics of NPWG according to the example 9.

FIG. 47 is a graph showing a distribution of a core width of NPWG according to the example 9.

FIG. 48 is a graph showing a distribution of an equivalent refractive index of NPWG according to the example 9.

FIG. 49 is a graph showing a potential distribution of NPWG according to an example 10.

FIG. 50 is a graph showing group delay characteristics of NPWG according to the example 10.

FIG. 51 is a graph showing reflectance characteristics of NPWG according to the example 10.

FIG. 52 is a graph showing a distribution of a core width of NPWG according to the example 10.

FIG. 53 is a graph showing a distribution of an equivalent refractive index of NPWG according to the example 10.

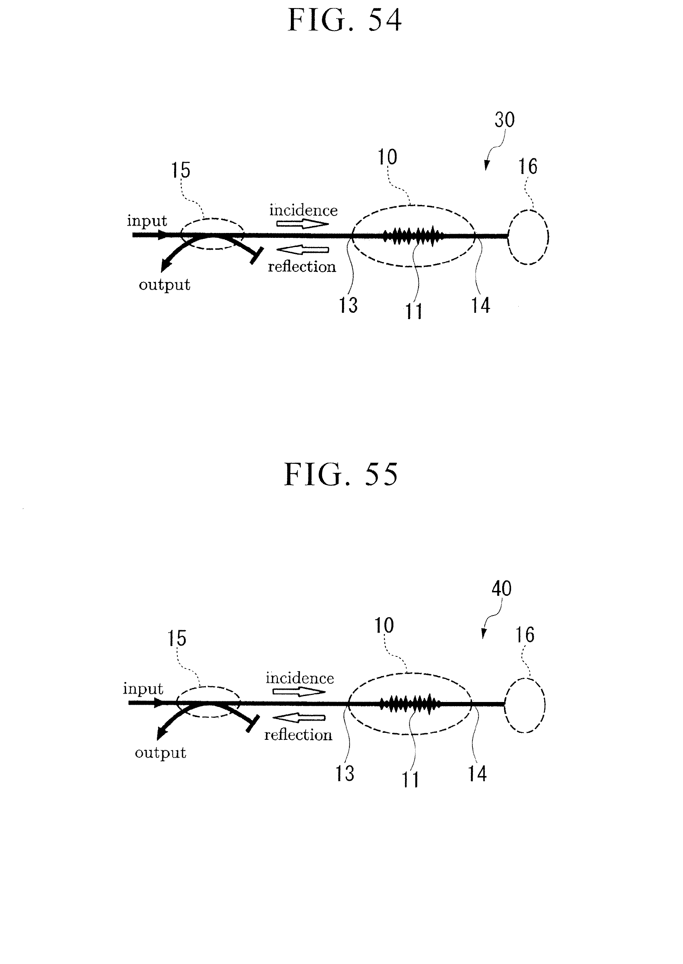

FIG. 54 shows a configuration of an embodiment of a gain equalizer according to the present invention.

FIG. 55 shows a configuration of an embodiment of a filter according to the present invention.

FIG. 56 is a graph showing reflectance characteristics of NPWG according to an example 11.

FIG. 57 is a graph showing a distribution of a core width of NPWG according to the example 11.

FIG. 58 is a graph showing reflectance characteristics of NPWG according to an example 12.

FIG. 59 is a graph showing a distribution of a core width of NPWG according to the example 12.

FIG. 60 is a graph showing reflectance characteristics of NPWG according to an example 13.

FIG. 61 is a graph showing group delay characteristics of NPWG according to the example 13.

FIG. 62 is a graph showing a distribution of a core width of NPWG according to the example 13.

FIG. 63 is a graph showing reflectance characteristics of NPWG according to an example 14.

FIG. 64 is a graph showing group delay characteristics of NPWG according to the example 14.

FIG. 65 is a graph showing a distribution of a core width of NPWG according to the example 14.

FIG. 66 is a graph showing reflectance characteristics of NPWG according to an example 15.

FIG. 67 is a graph showing group delay characteristics of NPWG according to the example 15.

FIG. 68 is a graph showing a distribution of a core width of NPWG according to the example 15.

[Description of Reference Numerals]

10    NPWG
11    core
12    cladding
13    reflecting end
14    transmitting end
15    circulator
16    nonreflecting terminal
20    optical waveguide-type dispersion compensation device
30    gain equalizer
40    filter

[Best Modes for Carrying Out the Invention]

In the optical waveguide according to the present invention, the equivalent refractive index of a core which embedded in a cladding changes unevenly along the light propagation direction.

Hereinafter, an embodiment of the optical waveguide according to the present invention shall be described with reference to the drawings.

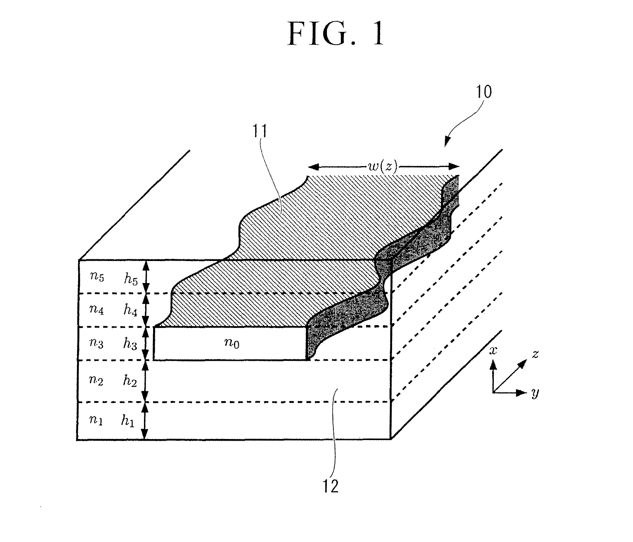

FIG. 1 is a schematic perspective view that shows one embodiment of an optical waveguide according to the present invention. As a way to causes the equivalent refractive index of the core to change unevenly along the light propagation direction, the optical waveguide of the present embodiment uses a non-uniform planar waveguide (NPWG) that has a non-uniform width in which the width w of the core is made to change along the longitudinal direction (z). Here, non-uniform indicates that the physical dimension changes along with location in the direction of travel of the waveguide. In FIG. 1, reference numeral 10 denotes NPWG, numeral 11 denotes the core and numeral 12 denotes the cladding.

The NPWG 10 of the present embodiment has the core 11 in the cladding 12. The core 11, as shown in FIG. 1, has a constant height of $h_3$. Also, the width w of the core 11 changes unevenly along the longitudinal direction (z), and changes the local equivalent refractive index in the propagation mode of the waveguide.

The principle of operation of the NPWG 10 appears to be similar to the grating of FBG. However, in relation to changes in the equivalent refractive index, in contrast to changing the refractive index of the core medium as in FBG, in the NPWG 10 of the present embodiment, the equivalent refractive index is changed by changing the width of the core 11 along the longitudinal direction. In this way, in relation to changes in the equivalent refractive index, the principles of operation of the two completely differ.

In the NPWG 10, the rate of change of the equivalent refractive index obtained by changing the width of the core 11 along the longitudinal direction is great compared to the case of FBG, and fine and exact control is easy.

Since the structure of the NPWG 10 is planar, it can be fabricated in large quantities by a widely known manufacturing process, and manufacturing cost can be reduced.

As this NPWG 10, it is possible to use a silica glass-based material. In that case, for example, the cladding is formed from pure silica glass, and the core may be formed from a germanium-doped silica glass. Also, it is possible to use a resinous material.

In the case of using a silicon-based material as the NPWG 10, if control is performed by adding an electrode to this silicon-based material, it is possible to realize a variable device. In the case of adding heat to this device, the waveguide elongates due to thermal expansion of the material. For that reason, the characteristics shift to the long wavelength side. By employing this characteristic, a variable device controlled by heat can be obtained.

The width distribution of the core of the NPWG 10 is designed by using an inverse scattering problem method which can obtain a required width distribution from a desired reflection spectrum.

First an electromagnetic field propagating through NPWG 10 is formulated in the following manner. (reference: J. E. Sipe, L. Poladian, and C. Martijn de Sterke, "Propagation through nonuniform grating structures," J. Opt. Soc. Am. A, vol. 11, no. 4, pp. 1307-1320, 1994). If the time fluctuation of the electromagnetic field is assumed to be exp(-iωt), from Maxwell's equations, an electromagnetic field that propagates through a NPWG 10 is expressed by Equations (1) and (2).

$$\frac{dE(z)}{dz} = i\omega\mu_0 H(z) \qquad \cdot\cdot\cdot \ (1)$$

$$\frac{dH(z)}{dz} = i\omega\varepsilon_0 n^2(z)E(z) \qquad \cdot\cdot\cdot \ (2)$$

Note that in the aforementioned Equations (1) and (2), E and H denote the complex amplitudes of the electric field and magnetic field, respectively, and n denotes the refractive index of a waveguide.

Here, the amplitude $A_+(z)$ of the electric power wave that propagates at the front of z, and the amplitude $A_-(z)$ of the electric power wave that propagates at the rear of z, which are respectively defined by the following Equations (3) and (4),

$$A_+(z) = \frac{1}{2}\left[\frac{n(z)}{n_0}\right]^{1/2}\left[E(z) + Z_0\frac{H(z)}{n(z)}\right] \qquad \cdot\cdot\cdot \ (3)$$

$$A_-(z) \;=\; \frac{1}{2}\left[\frac{n(z)}{n_0}\right]^{1/2}\left[E(z) - Z_0\frac{H(z)}{n(z)}\right] \qquad \cdot \cdot \cdot \; (4)$$

are introduced to the aforementioned Equation (1) and Equation (2), respectively. Note that $Z_0 = \sqrt{\mu_0/\varepsilon_0}$ denotes impedance in a vacuum, and $n_0$ denotes the reference refractive index. From these variables, Equations (5) and (6) are derived:

$$\frac{dA_+(z)}{dz} \;=\; +i\frac{w}{c}n(z)A_+(z) + \frac{1}{2}\left(\frac{d\{\ln[n(z)]\}}{dz}\right)A_-(z) \qquad \cdot \cdot \cdot \; (5)$$

$$\frac{dA_-(z)}{dz} \;=\; -i\frac{w}{c}n(z)A_-(z) + \frac{1}{2}\left(\frac{d\{\ln[n(z)]\}}{dz}\right)A_+(z) \qquad \cdot \cdot \cdot \; (6)$$

Note that c expresses the velocity of light in a vacuum.

When a variable transformation is performed with Equation (7),

$$x = \frac{\omega_0}{2\pi c}\int_0^z n(s)\,ds, \;\; v_1 = A_-, \;\; v_2 = A_+, \;\; k = \frac{2\pi\omega}{\omega_0}, \;\; u(x) = -\frac{1}{2}\frac{d\{\ln[n(x)]\}}{dx}$$

$$\cdot \cdot \cdot \; (7)$$

Equations (5) and (6) are reduced to Zakharov-Shabat equations respectively shown in the following Equations (8) and (9):

$$\frac{dv_1(x,k)}{dx} + ikv_1(x,k) \;=\; -u(x)v_2(x,k) \qquad \cdot \cdot \cdot \; (8)$$

$$\frac{dv_2(x,k)}{dx} - ikv_2(x,k) \;=\; -u(x)v_1(x,k) \qquad \cdot \cdot \cdot \; (9)$$

Note that $\omega_0$ denotes the reference angular frequency.

These Zakharov-Shabat equations can be solved as inverse scattering problems. That is, from the spectrum data of the reflection coefficient defined by the following Equation (10)

$$r(k) = \lim_{x \to -\infty} \left[ \frac{v_1(x,k)}{v_2(x,k)} \right] \exp(2ikx) \qquad \cdot \cdot \cdot \quad (10)$$

it is possible to numerically solve the potential function u(x) (reference: P. V. Frangos and D. L. Jaggard, "A numerical solution to the Zakharov-Shabat inverse scattering problem," IEEE Trans. Antennas and Propag., vol. 39, no. 1, pp. 74-79, 1991).

When this is applied to the above problem, it is possible to acquire a potential that realizes a desired reflection spectrum. Here, the reflection spectrum signifies the complex reflection data that is obtained from the group delay amount with respect to the wavelength and the reflectance.

If the potential u(x) is obtained, the local equivalent refractive index n(x) is found as shown by the following Equation (11).

$$n(x) = n(0) \exp \left[ -2 \int_0^x u(s) ds \right] \qquad \cdot \cdot \cdot \quad (11)$$

Furthermore, the core width w (x) at a predetermined position in the light propagation direction is found from the relationship between the thickness of the core of the waveguide that is to be actually fabricated and the equivalent refractive index with respect to the width of the core, which is found from the core refractive index and the cladding refractive index.

When the NPWG 10 according to the present invention is used in a dispersion compensation device 20 as described below, the NPWG 10 is designed taking into account the used length, used band and used wavelength of the optical fiber to be compensated in order to prepare spectrum data (to enable dispersion compensation) inverted with respect to the dispersion of the optical fiber to be compensated, and thus solve the inverse problem using that design method. In this manner, small and high-performance dispersion compensation device 20 can be realized.

When the NPWG 10 according to the present invention is used in a gain equalizer 30 as described below, a gain equalizer 30 can be produced by constructing the NPWG 10 by preparing spectrum data to invert the gain spectrum of the fiber system of the gain equalizer 30, and solving the inverse problem using the above design method. The shape of the gain spectrum may be suitably set in response to the applied gain equalizer 30. For example, approximate curves are applied to the shape of the gain spectrum, the curves include sine waves, Gaussian distributions, or the like.

When the NPWG 10 according to the present invention is used in a filter 40 as described below, the filter 40 can be produced by constructing the NPWG 10 by preparing spectrum data to invert the gain spectrum of the wavelength band to be filtered, and solving the inverse problem with the above design method.

The NPWG 10 according to the present invention is, for example, manufactured in the following way. First, a lower cladding layer of the NPWG 10 is provided. Next, a core layer with a refractive index that is greater than this lower cladding layer is provided on the lower cladding layer. Next, the core 11 is formed by applying a processing that, in the core layer, leaves a predetermined core shape designed so that the equivalent refractive index of the core changes unevenly along the light propagation direction and removes the other portions. Next, an cladding layer is provided so as to cover the core 11, and the NPWG 10 is manufactured.

In this way, when forming the core 11 of the NPWG 10, it is preferable to use a mask that has the shape of the aforementioned core width w(x) (that is designed so the equivalent refractive index of the core 10 changes unevenly along the light propagation direction) and form the core 11 by a photolithography method. The materials and procedures that are used in this photolithography method can be implemented using materials and procedures that are used in a photolithography method that is well-known in the semiconductor manufacturing field. Also, the film formation method of the cladding layer and the core layer can be implemented using a well-known film formation technique that is used in ordinary optical waveguide fabrication.

In the embodiment, as shown in FIG. 1, the NPWG 10 is illustrated with a structure in which the core 11 is embedded in the cladding 12 with a height (thickness) that is constant, and a width that changes unevenly along the longitudinal direction. The optical waveguide that is used in the present invention is not limited only to this illustration, and various changes are possible.

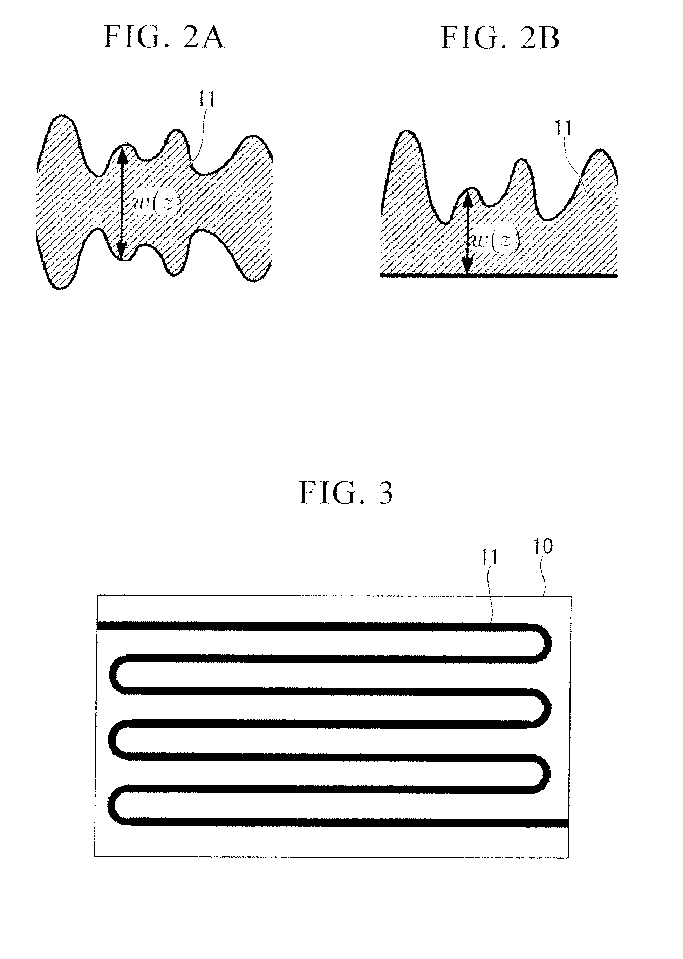

For example, as shown in FIG. 2A, a structure is possible in which the width distribution of the core 11 is unevenly distributed along the light propagation direction so that both sides in the width direction are symmetrical from the center of the core 11. Moreover, as shown in FIG. 2B, a structure is possible in which the width distribution of the core 11 is unevenly distributed along the light propagation direction so that both sides in the width direction may be asymmetrical from the center of the core 11.

Also, besides the structure that provides the core 11 in a linear manner along the longitudinal direction (z) of the NPWG 10 as shown in FIG. 1, there may also be a structure that provides the core 11 in a meandering shape as shown in FIG. 3. By making a structure that provides the core 11 in a meandering shape in this way, further miniaturization of the NPWG 10 becomes possible.

Optical Waveguide-type Wavelength Dispersion Compensation Optical Device

An embodiment of an optical waveguide-type wavelength dispersion compensation optical device (hereinafter referred to as "dispersion compensation device") will be described below. The dispersion compensation device according to the present invention includes the NPWG 10 according to the present invention as a reflection-type wavelength dispersion compensation device. The width w of the core 11 of the NPWG 10 according to the present invention changes unevenly along the longitudinal direction (z), and changes the local equivalent refractive index in the propagation mode of the waveguide. In this manner, a reflection-type wavelength dispersion compensation function is imparted to the NPWG 10.

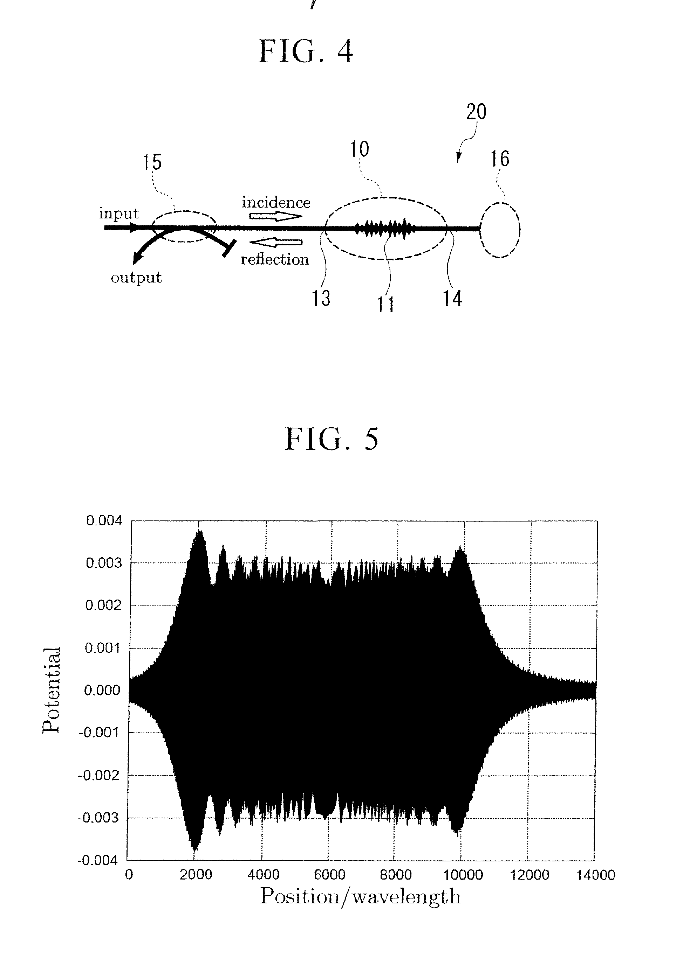

FIG. 4 shows the configuration of an embodiment of a dispersion compensation device according to the present invention. The dispersion compensation device 20 according to the present embodiment comprises the NPWG 10 described above and a circulator 15 that is connected to the reflecting end 13 side of the NPWG 10. The transmitting end 14 of the NPWG 10 is a nonreflecting terminal 16. An optical fiber to be compensated and not illustrated is connected to the input side of the circulator 15. A downstream side optical fiber is connected to the output side of the circulator 15. This downstream side optical fiber is used in the light transmission path.

The dispersion compensation device 20 of the present invention is a reflection-type device, and the light signal that is input from the optical fiber to be compensated to the input side of the circulator 15 enters the NPWG 10. Then the light signal is reflected by the NPWG 10, and the reflected wave thereof is output via the circulator 15.

The NPWG 10 of this dispersion compensation device 20 has the reflection rate characteristics that can compensate the wavelength dispersion of an optical fiber to be compensated, as mentioned above. For that reason, when the light signal that is outputted from the optical fiber to be compensated is reflected by the NPWG 10, the wavelength dispersion of that light signal is compensated and outputted. Then, the light signal that was outputted from the dispersion compensation device 20 is inputted into the optical fiber on the downstream side that is connected to the output side of the circulator 15, and propagates through this fiber.

In the dispersion compensation device 20 of the present invention, after manufacturing the NPWG 10 as described above, the transmitting end 14 of this NPWG 10 is terminated with the nonreflecting terminal 16. Moreover, the circulator 15 or a directional coupler is connected to the reflecting end 13 of the NPWG10. Thereby, the dispersion compensation device 20 shown in FIG. 4 is obtained.

Gain Equalizer

An embodiment of a gain equalizer will be described. The gain equalizer according to the present invention uses the NPWG 10 according to the present invention as a reflection-type gain equalizing device. The width w of the core 11 of the NPWG 10 according to the present invention changes unevenly along the longitudinal direction (z), and changes the local equivalent refractive index in the propagation mode of the waveguide. With the change in the local refractive index, an optical signal propagating in the waveguide is reflected. The reflected light has the wavelength dependent characteristics that compensate gain wavelength dependent characteristics of the fiber amplifier.

FIG. 4 shows the configuration of an embodiment of a gain equalizer according to the present invention. The gain equalizer 30 according to the present embodiment comprises the NPWG 10 described above and a circulator 15 that is connected to the reflecting end 13 side of the NPWG 10. The transmitting end 14 of the NPWG 10 is a nonreflecting terminal 16. A fiber amplifier (not shown) is connected to the input side of the circulator 15. A downstream side optical fiber is connected to the output side of the circulator 15. This downstream side optical fiber is used in the light transmission path.

The gain equalizer 30 of the present invention is a reflection-type device, and the light signal that is input from the fiber amplifier to the input side of the circulator 15 enters the NPWG 10. Then the light signal is reflected by the NPWG 10, and the reflected wave thereof is output via the circulator 15. At this time, the wavelength-dependent characteristics of the light intensity are compensated in the optical signal at each wavelength that is reflected and output.

As described above, the NPWG 10 of the gain equalizer 30 has reflective index characteristics enabling compensation for wavelength-dependent characteristics of the light intensity of the fiber amplifier. As a result, when the optical signal output from the fiber amplifier is reflected by the NPWG 10, compensation is executed for the wavelength-dependent characteristics of the light intensity of that optical signal, and the signal is output. Then the optical signal output from the gain equalizer 30 is input into the downstream optical fiber connected to the output side of the circulator 15 and propagates in the fiber.

Filter

An embodiment of a filter will be described. The filter according to the present invention uses the NPWG 10 according to the present invention as a reflection-type filtering device. The width w of the core 11 of the NPWG 10 according to the present invention changes unevenly along the longitudinal direction (z), and changes the local equivalent refractive index in the propagation mode of the waveguide. With the change in the refractive index, an optical signal in a desired wavelength band of the optical signals that propagate in the waveguide is filtered.

FIG. 4 shows the configuration of an embodiment of a filter according to the present invention. The filter 40 according to the present embodiment comprises the NPWG 10 described above and a circulator 15 that is connected to the reflecting end 13 side of the NPWG 10. The transmitting end 14 of the NPWG 10 is a nonreflecting terminal 16. An optical fiber (not shown) is connected to the input side of the circulator 15. A downstream side optical fiber is connected to the output side of the circulator 15. This downstream side optical fiber is used in the light transmission path.

The filter 40 of the present invention is a reflection-type device, and the light signal that is input from the optical fiber to the input side of the circulator 15 enters the NPWG 10. Then the light signal is reflected by the NPWG 10, and the reflected wave thereof is output via the circulator 15. At this time, only an optical signal of a desired wavelength band is reflected thereby.

As described above, the NPWG 10 of the filter 40 as has reflective index characteristics enabling reflection of an optical signal in a desired wavelength band of the optical signals that propagate in the waveguide. As a result, when the optical signal output from the optical fiber is reflected by the NPWG 10, only an optical signal in a desired wavelength band is reflected and output. Then the optical signal output from the filter 40 is input into the downstream optical fiber connected to the output side of the circulator 15 and propagates in the fiber.

The filter 40 according to the present embodiment may be configured as a filter bank in which the NPWG 10 is divided into a plurality of channels and light in a desired wavelength band is reflected by each channel. At that time, group delay characteristics of each channel preferably deviate, for example, by 1 ps - 10 ps. In this manner, since the reflection center of the NPWG 10 is located in a different position, the regions in which the width of the core 11 undergoes a large change mutually deviate. As a result, concentration of the reflection center on a single point in the NPWG 10 can be prevented, the change rate of the width of the core 11 can be reduced and manufacturing is thereby facilitated.

The present invention will be described in further detail making reference to the actual examples. However the present invention is not limited to the examples as described below. Examples 1 - 10 relate to a dispersion compensation device according to the present invention. Examples 11 - 12 relate to a gain equalizer according to the present invention. Examples 13 - 15 relate to a filter according to the present invention.

[Examples]

Example 1

A dispersion compensation device was designed that realizes compensation of wavelength dispersion in which the dispersion amount D -10ps/nm, and the relative dispersion slope RDS = 0.0034 $nm^1$ in the wavelength region [1545 nm - 1555 nm].

Since the dispersion amount compensated by this dispersion compensation device is low, the device is mainly used to compensate dispersion that remains uncompensated by DCF.

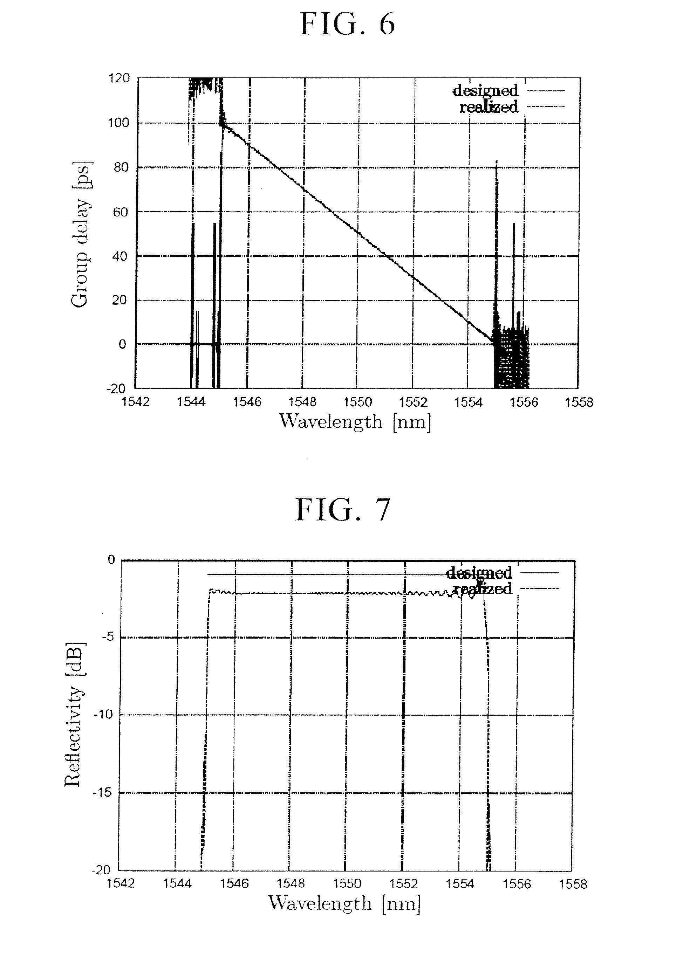

FIG. 5 is a graph showing a potential distribution of NPWG for a dispersion compensation device prepared according to this example. The horizontal axis of the graph expresses positions that are standardized by the central wavelength of 1550 nm. Using this potential, the group delay characteristics shown in FIG. 6 and the reflective index characteristics shown in FIG. 7 are obtained. In both figures, the spectrum data used in design (designed) and the spectrum data that are obtained (realized) are shown.

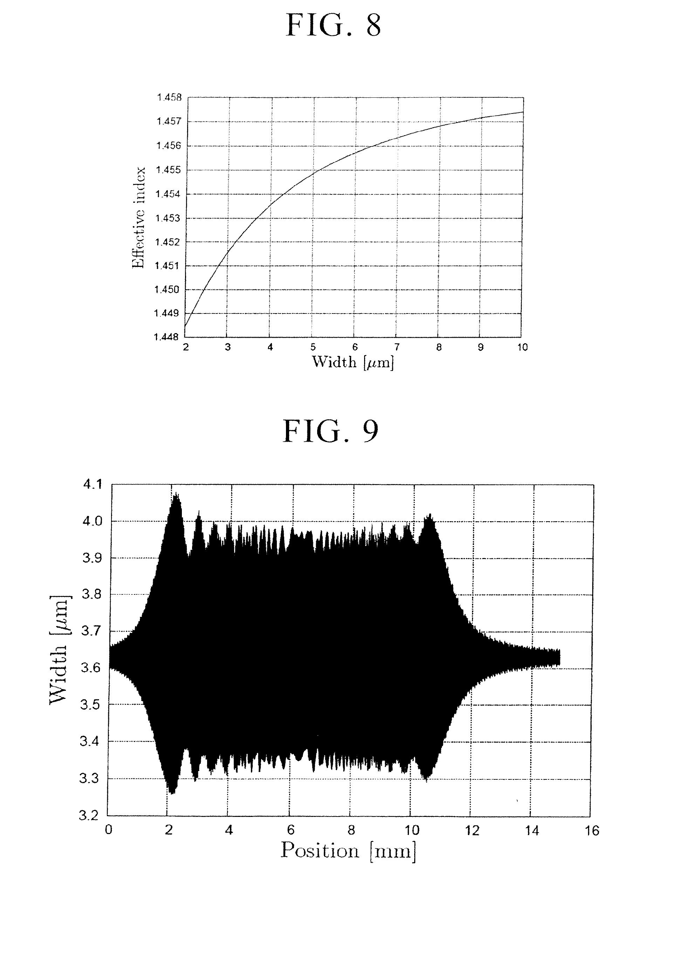

The NPWG according to this example is configured as a waveguide structure in which a core having a height $h_3 = 6$ $\mu$m and a relative refractive index difference $\Delta = 0.6\%$ is embedded in a cladding formed from quartz glass. The relationship of the width of the core and the equivalent refractive index in this waveguide structure at a wavelength of 1550 nm is shown in FIG. 8. The thickness of the cladding at this time is sufficiently large when compared with the core.

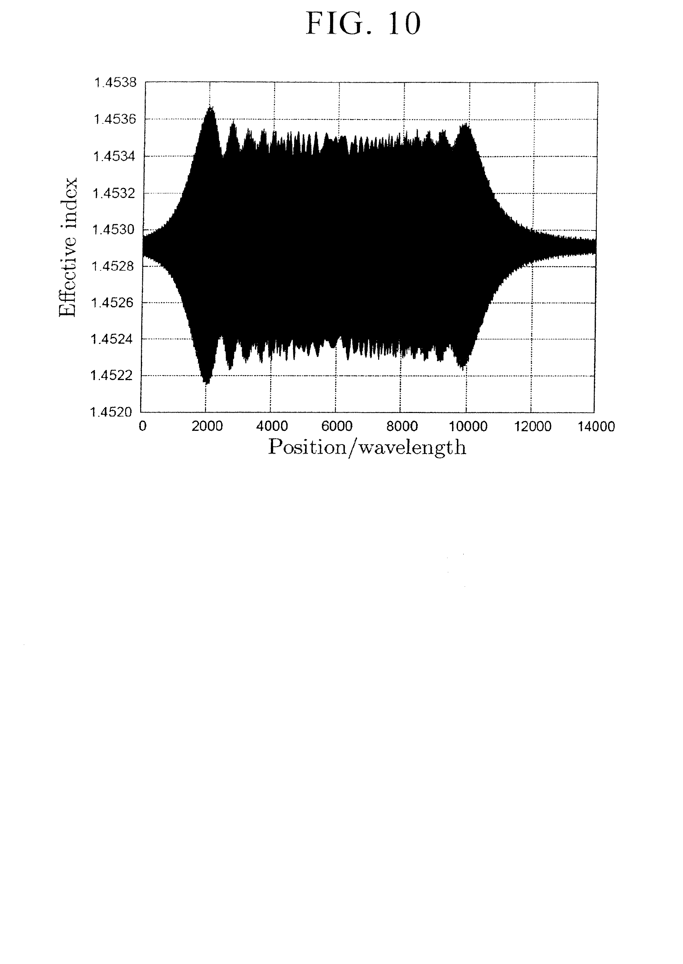

When using this waveguide structure, the core width distribution of the NPWG as realized in FIG. 6 and FIG. 7 is shown in FIG. 9. The distribution of the equivalent refractive index of the NPWG at this time is shown in FIG. 10.

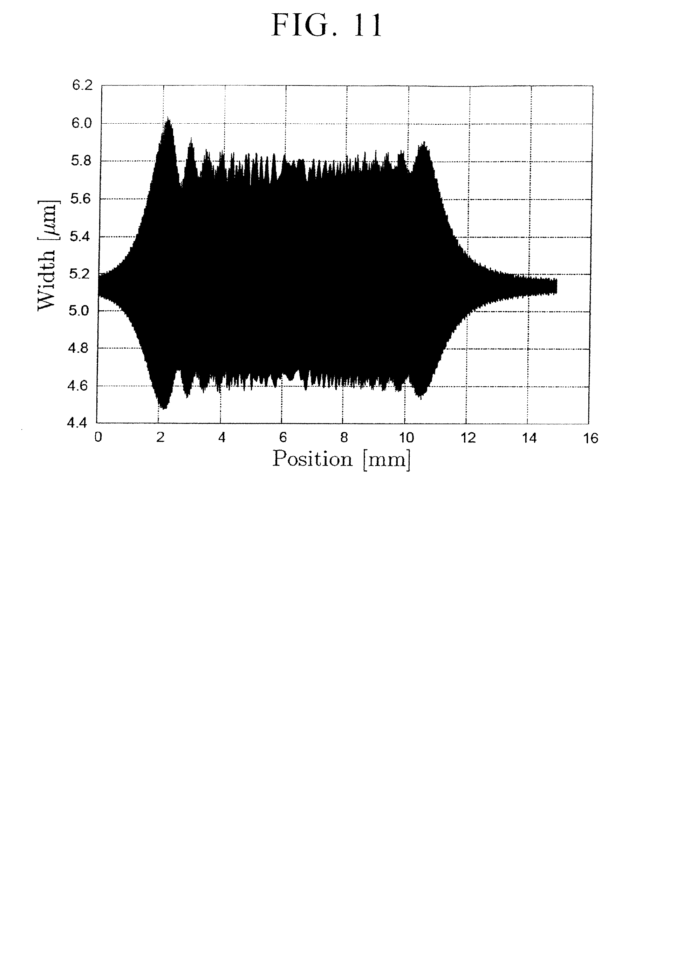

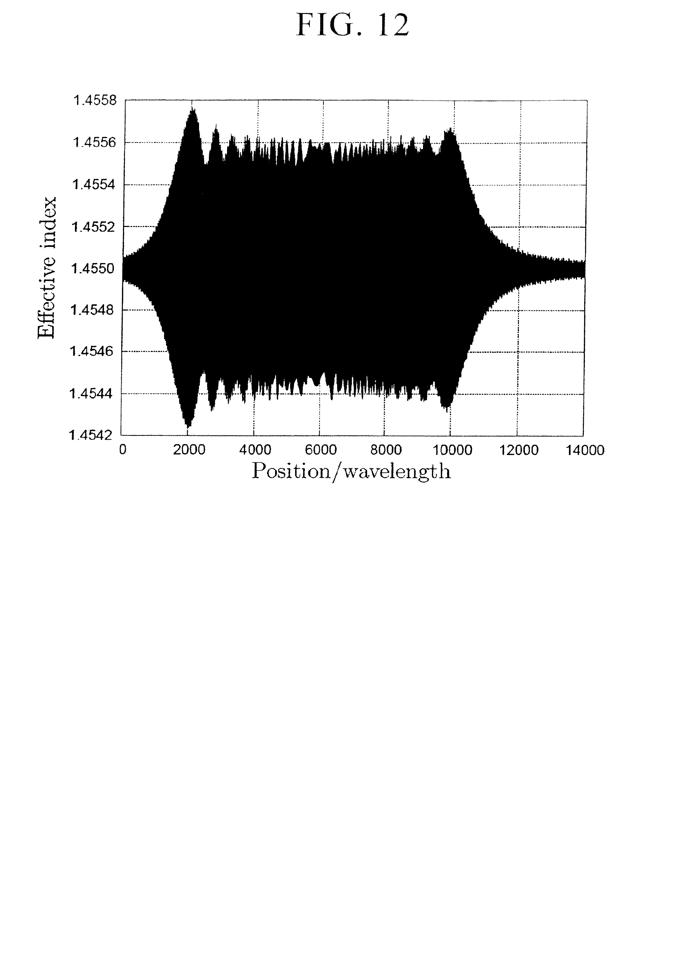

When using a waveguide structure having the same material, if the reference refractive index n(o) that indicates the average equivalent refractive index of the overall waveguide is set according to the thickness or the material of the waveguide, the same characteristics can be obtained using NPWGs having different core widths. FIG. 11 shows a core width distribution with respect to a core width direction when using a higher reference refractive index n(o) than the example above. The distribution of the equivalent refractive index of the NPWG at that time is shown in FIG. 12.

The material used in the core and the cladding is not limited to quartz glass, and use may be made of other conventional known transparent materials in the optical field such as silicon compounds, polymers or the like. In particular, when a material having a high refractive index is used, further downsizing of the device is enabled and transmission loss is reduced.

[Example 2]

A dispersion compensation device was designed that realizes compensation of wavelength dispersion in which the dispersion amount D = -50ps/nm, and the relative dispersion slope RDS = 0.0034 $nm^{-1}$ in the wavelength region [1545 nm -1555 nm]. In the same manner as the dispersion compensation device according to the example 1, the device is mainly used to compensate dispersion that remains uncompensated by DCF.

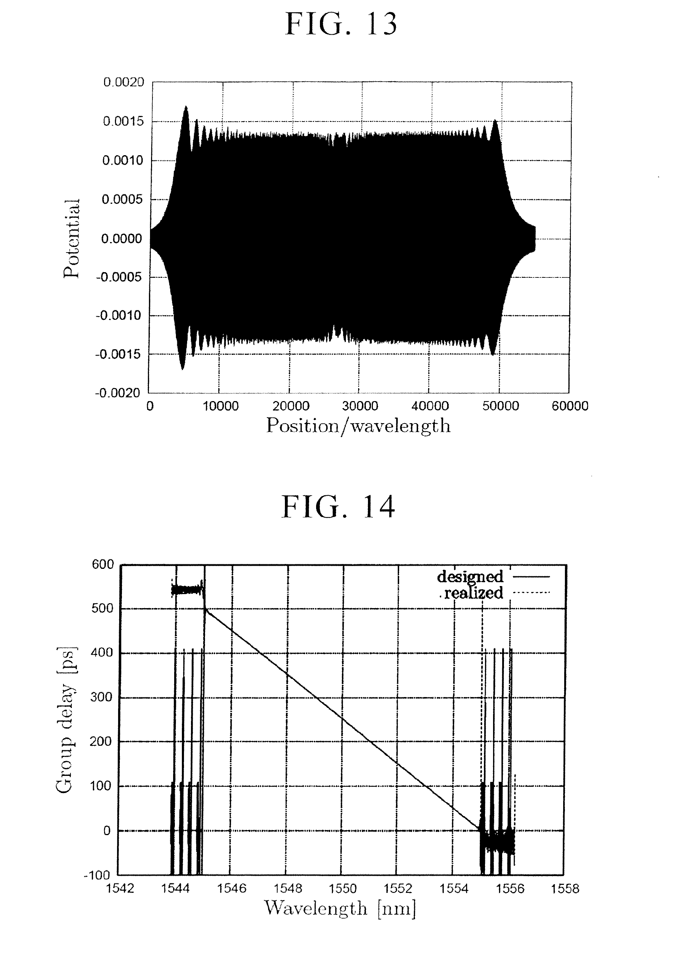

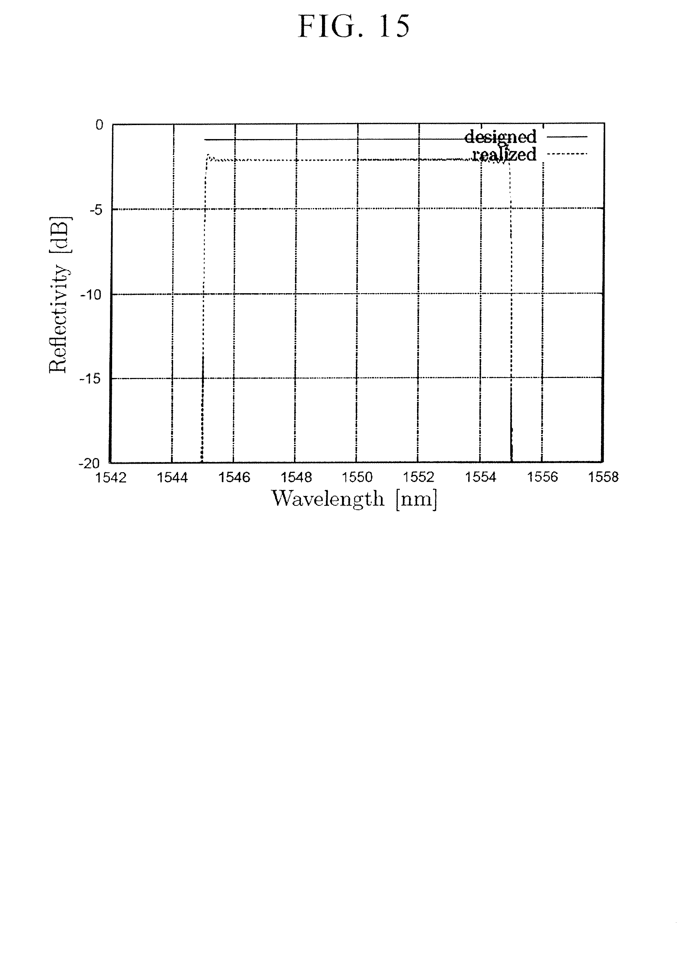

FIG. 13 is a graph showing a potential distribution of NPWG for a dispersion compensation device prepared according to this example. The horizontal axis of the graph expresses positions that are standardized by the central wavelength of 1550 nm. Using this potential, the group delay characteristics shown in FIG. 14 and the reflective index characteristics shown in FIG. 15 are obtained. In both figures, the spectrum data used in design (designed) and the spectrum data that are obtained (realized) are shown.

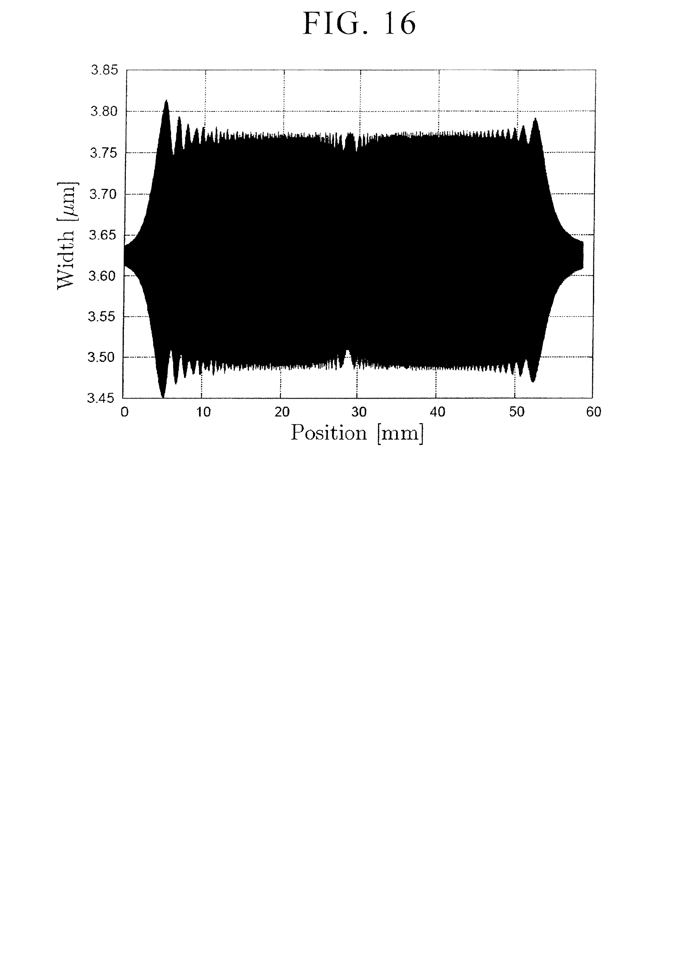

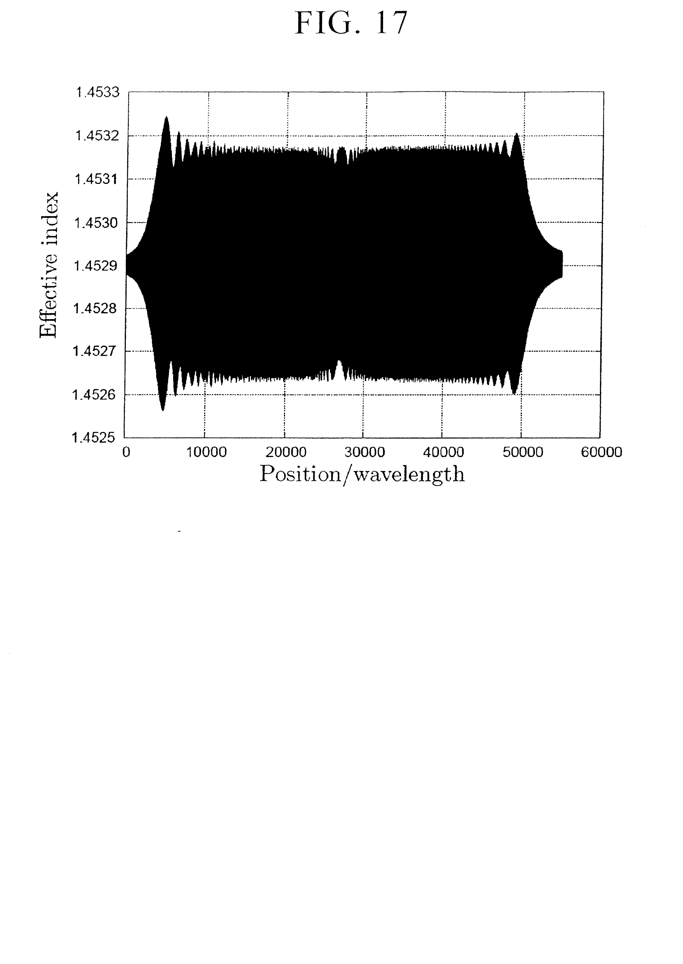

The NPWG according to this example is configured as a waveguide structure in which a core having a height $h_3$ = 6 $\mu$m and a relative refractive index difference $\Delta$= 0.6% is embedded in a cladding formed from pure quartz glass. In this waveguide structure, the core width distribution of the NPWG realizing the characteristics shown in FIG. 14 and FIG. 15 is shown in FIG. 16. The distribution of the equivalent refractive index of the NPWG at this time is shown in FIG. 17.

[Example 3]

A dispersion compensation device was designed that realizes compensation of wavelength dispersion in which the dispersion amount D = -100ps/nm, and the relative dispersion slope RDS = 0.0034 $nm^{-1}$ in the wavelength region [1545 nm - 1555 nm].
In the same manner as the dispersion compensation device according to the above examples, the device is mainly used to compensate dispersion that remains uncompensated by DCF. In this example, compensation is enabled for wavelength dispersion for a standard single-mode fiber having a length of approximately 6 km.

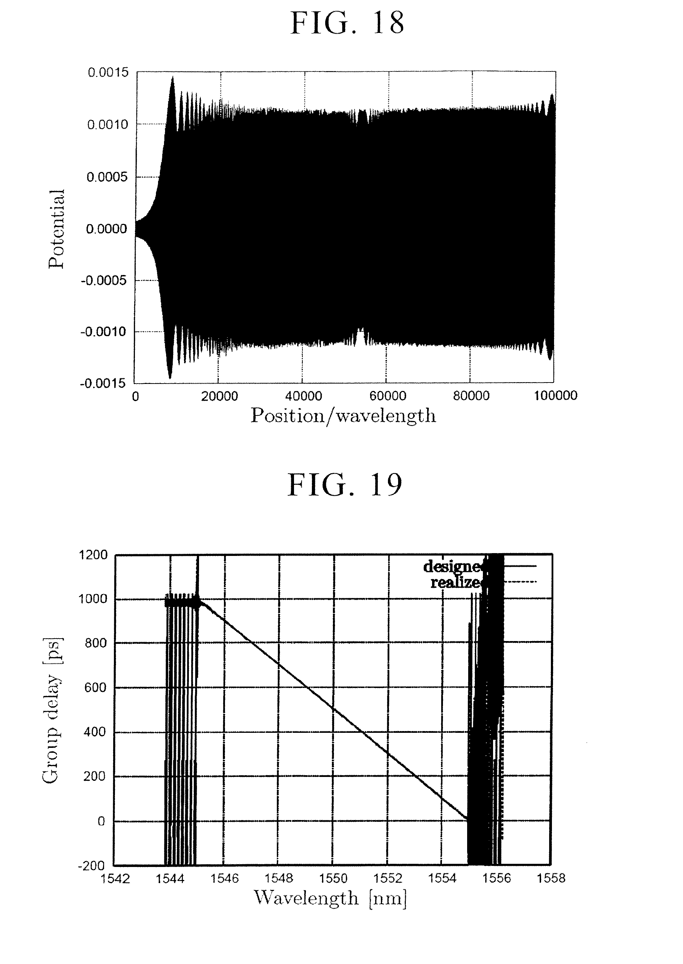

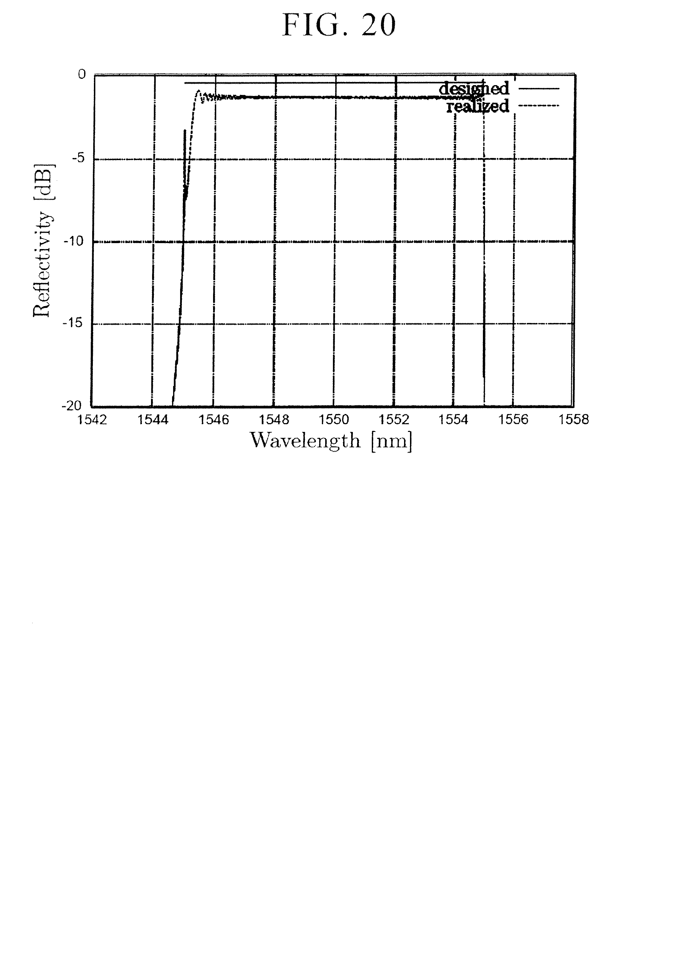

FIG. 18 is a graph showing a potential distribution of NPWG for a dispersion compensation device prepared according to this example. The horizontal axis of the graph expresses positions that are standardized by the central wavelength of 1550 nm. Using this potential, the group delay characteristics shown in FIG. 19 and the reflective index characteristics shown in FIG. 20 are obtained. In both figures, the spectrum data used in design (designed) and the spectrum data that are obtained (realized) are shown.

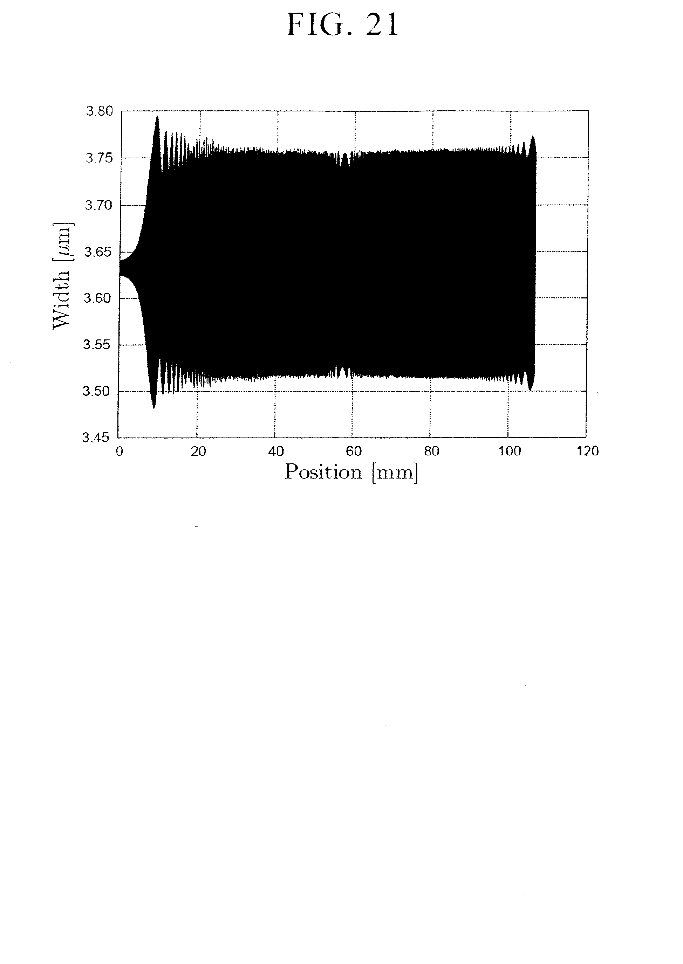

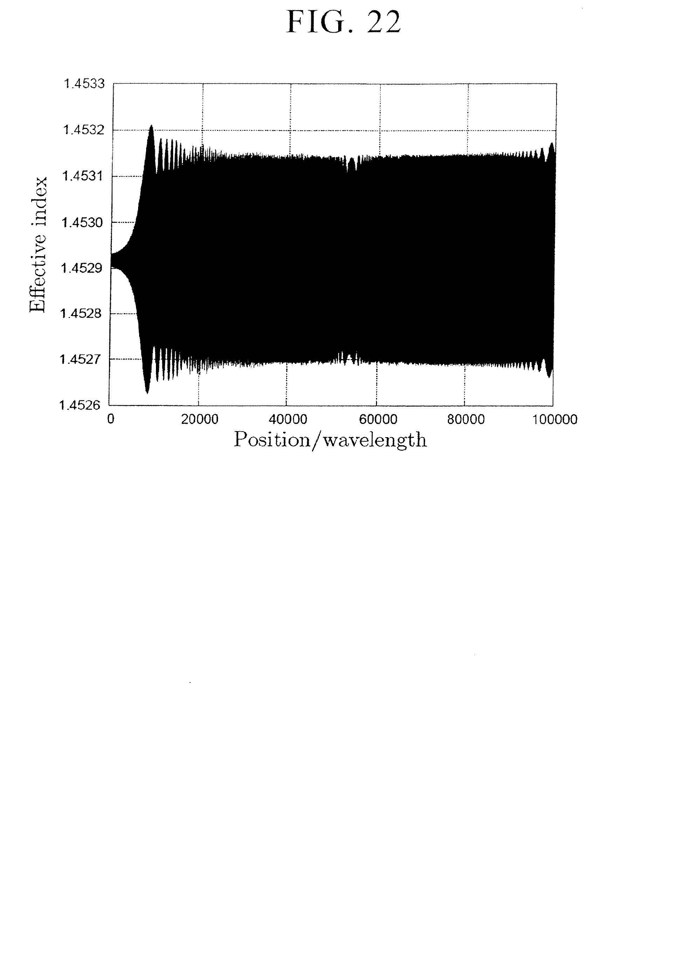

The NPWG according to this example is configured as a waveguide structure in which a core having a height $h_3$ = 6 $\mu$m and a relative refractive index difference $\Delta$= 0.6% is embedded in a cladding formed from pure quartz glass. In this waveguide structure, the core width distribution of the NPWG realizing the characteristics shown in FIG. 19 and FIG. 20 is shown in FIG. 21. The distribution of the equivalent refractive index of the NPWG at this time is shown in FIG. 22.

[Example 4]

A dispersion compensation device was designed that realizes compensation of wavelength dispersion in which the dispersion amount D = -100ps/nm, and the relative dispersion slope RDS = 0.0034 $nm^{-1}$ in the wavelength region [1549.6 nm - 1555.4 nm]. This device enables compensation for wavelength dispersion for an S-SMF having a length of approximately 100 km.

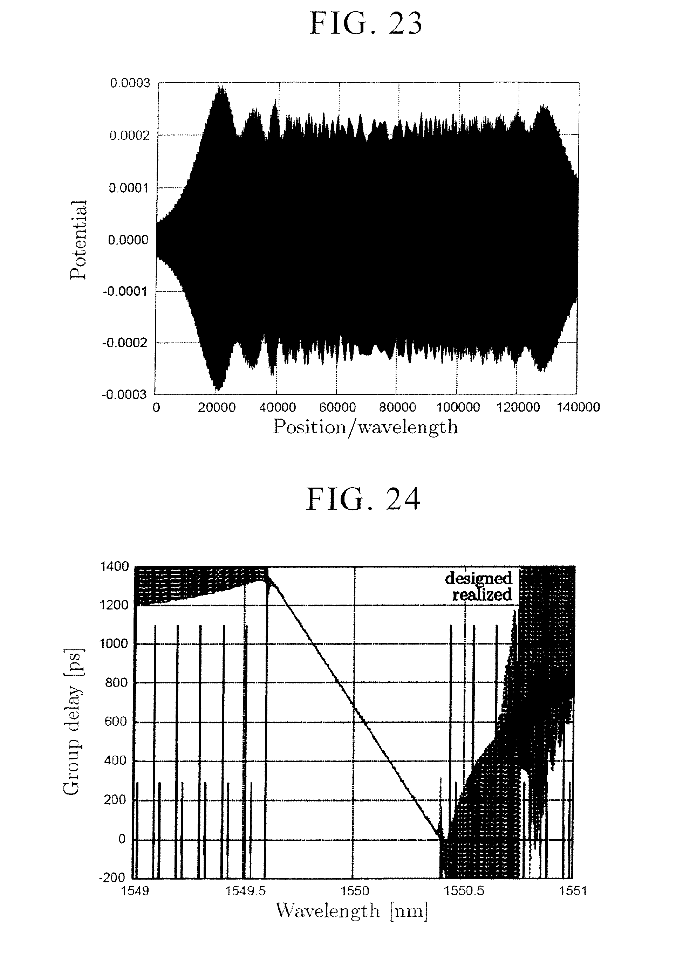

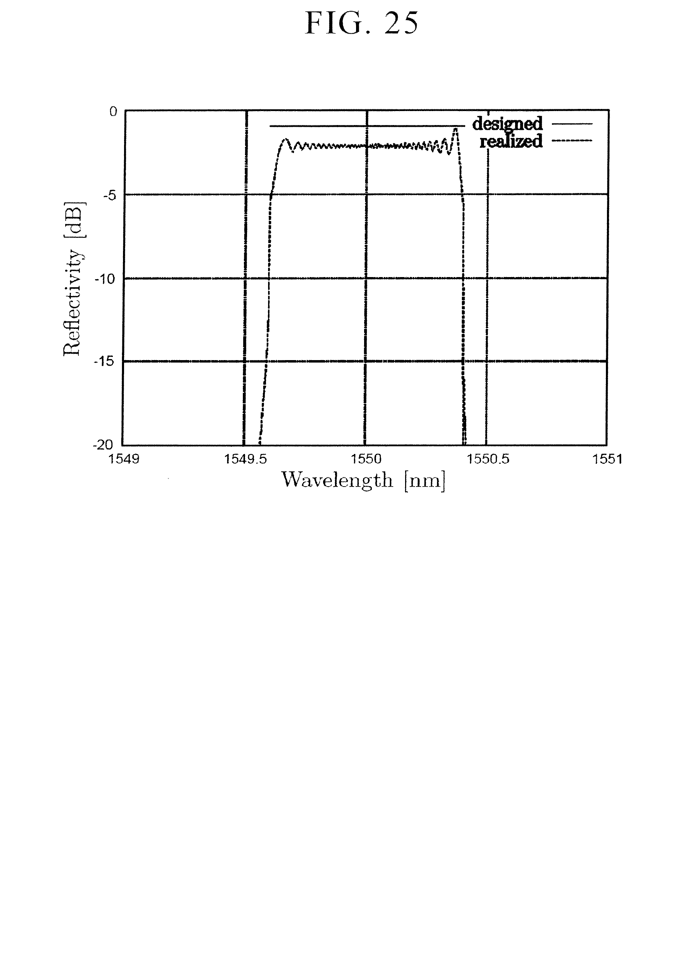

FIG. 23 is a graph showing a potential distribution of NPWG for a dispersion compensation device prepared according to this example. The horizontal axis of the graph expresses positions that are standardized by the central wavelength of 1550 nm. Using this potential, the group delay characteristics shown in FIG. 24 and the reflective index characteristics shown in FIG. 25 are obtained. In both figures, the spectrum data used in design (designed) and the spectrum data that are obtained (realized) are shown.

The NPWG according to this example is configured as a waveguide structure in which a core having a height

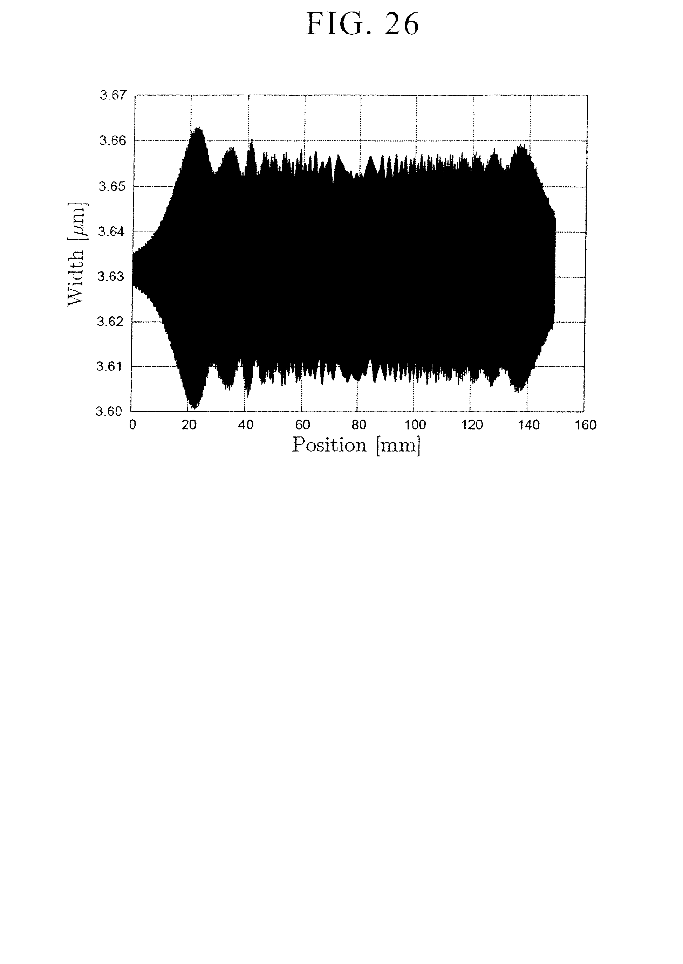

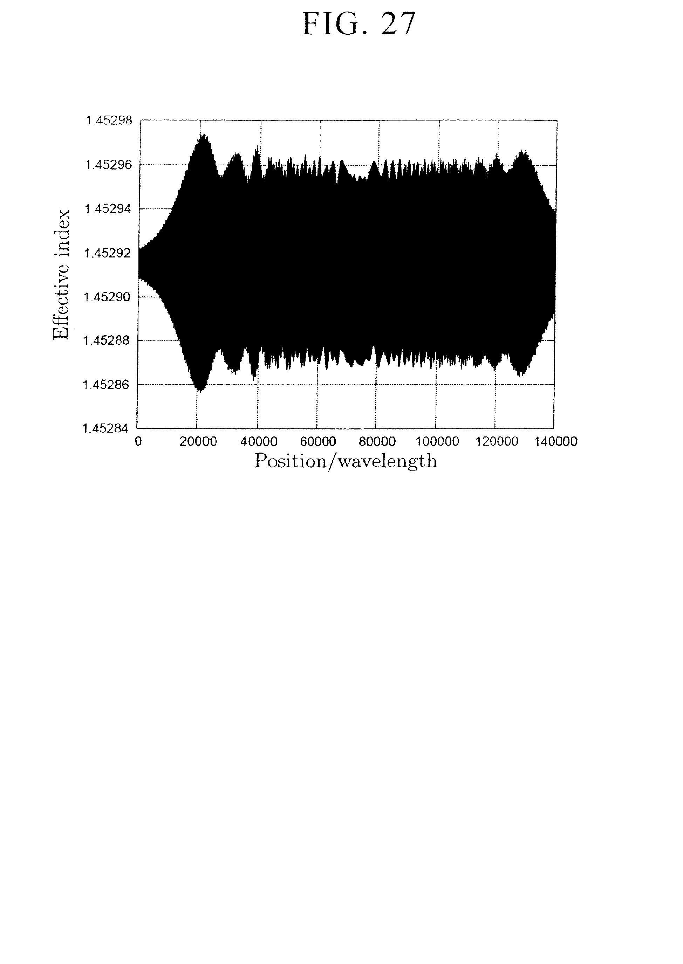

$h_3$ = 6 $\mu$m and a relative refractive index difference A= 0.6% is embedded in a cladding formed from pure quartz glass. In this waveguide structure, the core width distribution of the NPWG realizing the characteristics shown in FIG. 24 and FIG. 25 is shown in FIG. 26. The distribution of the equivalent refractive index of the NPWG at this time is shown in FIG. 27.

[Example 5]

A dispersion compensation device was designed that realizes compensation of wavelength dispersion in which the dispersion amount D = -340 ps/nm, and the relative dispersion slope RDS = 0.0034 nm$^{-1}$ in the wavelength region [1548 nm - 1552 nm]. In this example, the maximum dispersion amount is substantially 340 ps/nm x 4 nm = 1360 ps, and is approximately the same as the example 4. In this example, the wavelength band in which compensation for dispersion is enabled is four times that of the example 4. However in this example, although the band subject to compensation is increased, the length of fibers which can be compensated is reduced. In the present example, compensation for wavelength dispersion is enabled for an S-SMF having a length of approximately 20 km.

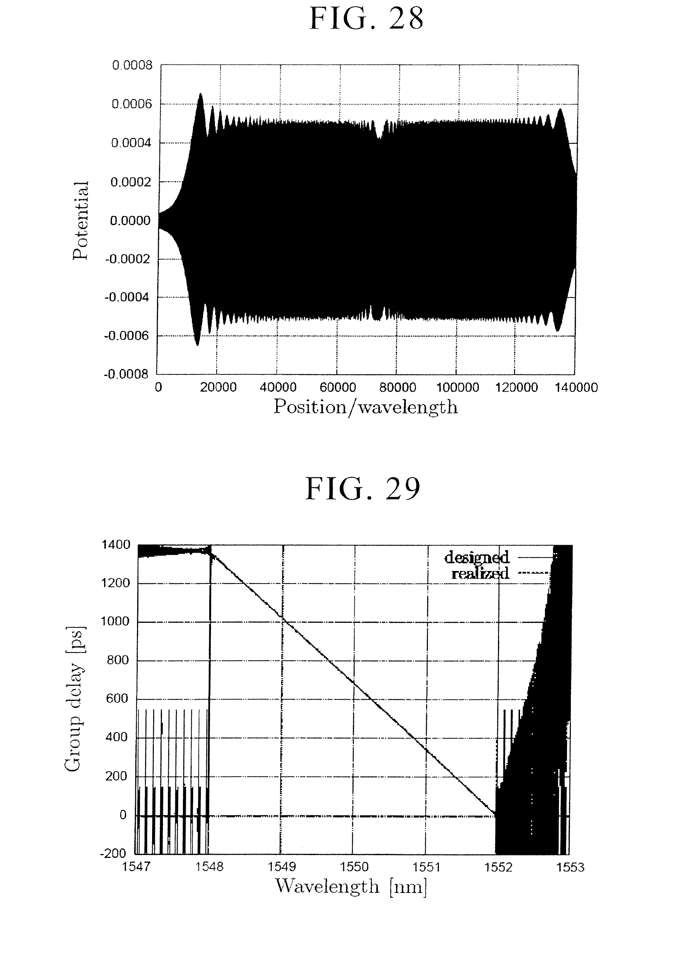

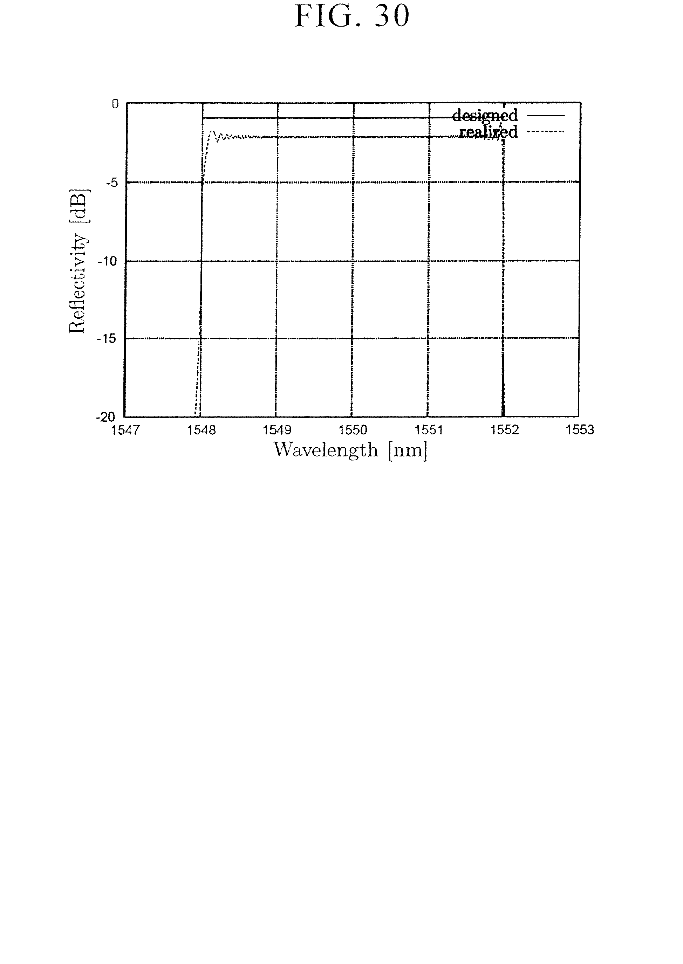

FIG. 28 is a graph showing a potential distribution of NPWG for a dispersion compensation device prepared according to this example. The horizontal axis of the graph expresses positions that are standardized by the central wavelength of 1550 nm. Using this potential, the group delay characteristics shown in FIG. 29 and the reflective index characteristics shown in FIG. 30 are obtained. In both figures, the spectrum data used in design (designed) and the spectrum data that are obtained (realized) are shown.

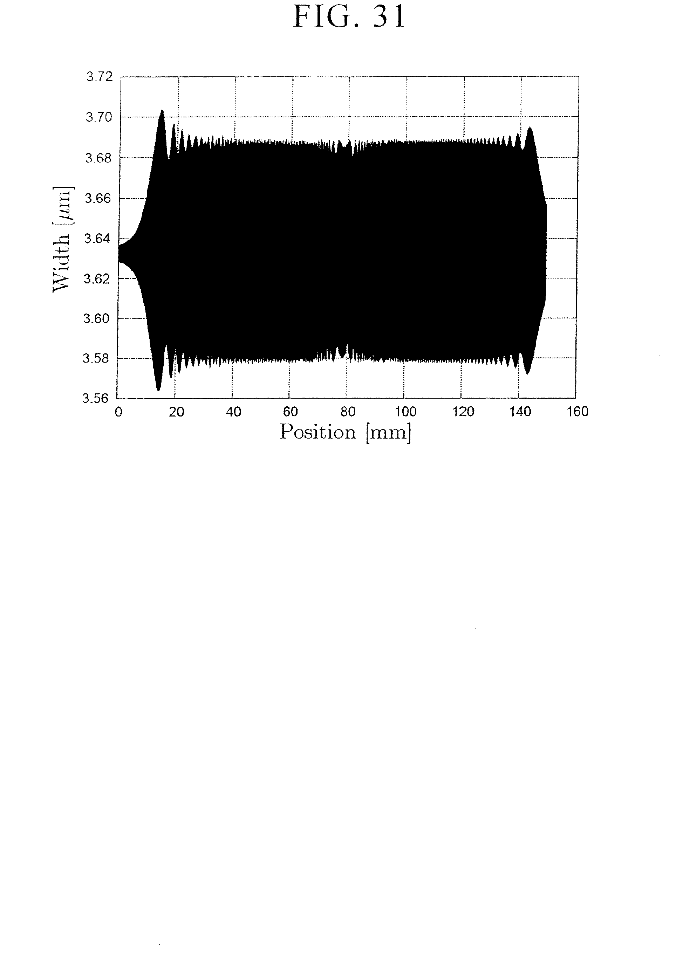

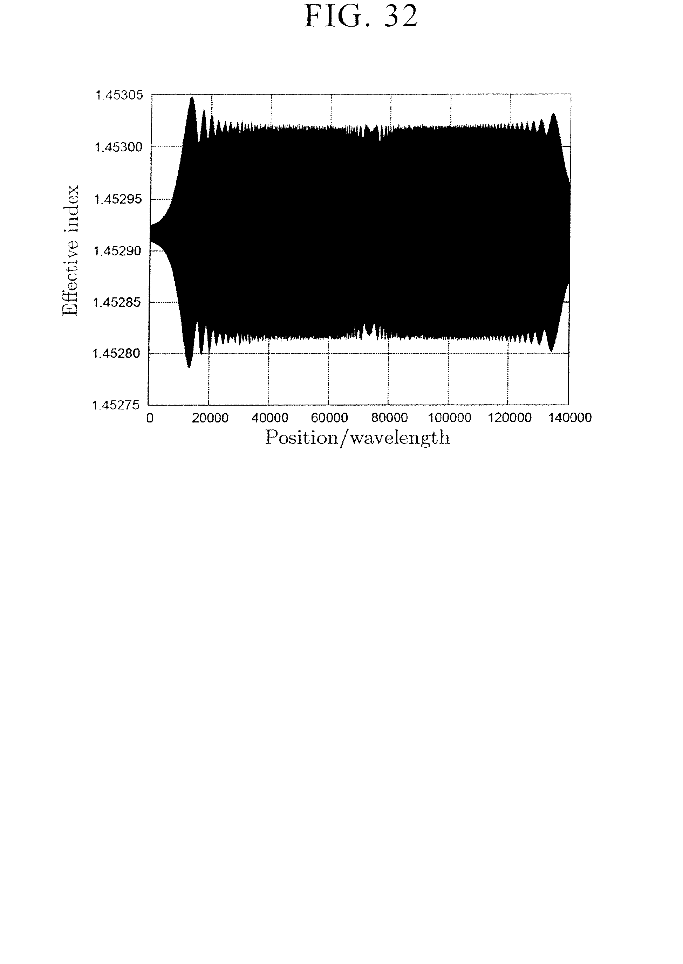

The NPWG according to this example is configured as a waveguide structure in which a core having a height $h_3$ = 6 $\mu$m and a relative refractive index difference $\Delta$= 0.6% is embedded in a cladding formed from pure quartz glass. In this waveguide structure, the core width distribution of the NPWG realizing the characteristics shown in FIG. 29 and FIG. 30 is shown in FIG. 31. The distribution of the equivalent refractive index of the NPWG at this time is shown in FIG. 32.

[Example 6]

A dispersion compensation device was designed that realizes compensation of wavelength dispersion in which the dispersion amount D = -170 ps/nm, and the relative dispersion slope RDS = 0.0034 nm$^{-1}$ in the wavelength region [1546 nm - 1554 nm].

In the example described in this example, the maximum dispersion amount is approximately 170 ps/nm x 8 nm = 1360 ps, and is approximately the same as the example 5. In this example, the wavelength band in which compensation for dispersion is enabled is two times that of the example 5. However in this example, although the band subject to compensation is increased, the length of fibers which can be compensated is reduced. In this example, compensation for wavelength dispersion is enabled for an S-SMF having a length of approximately 10 km.

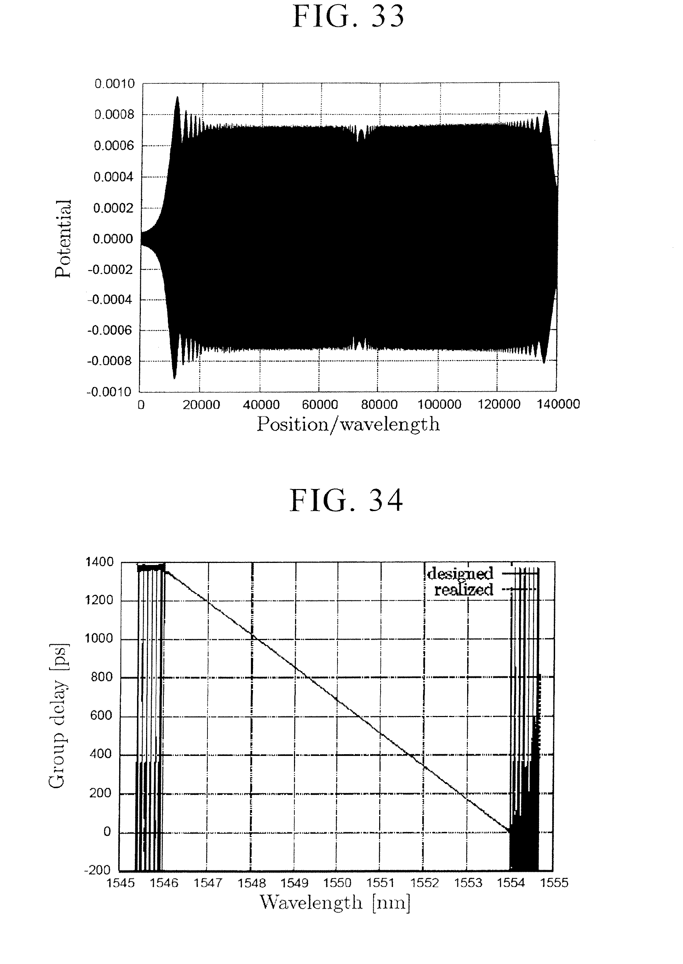

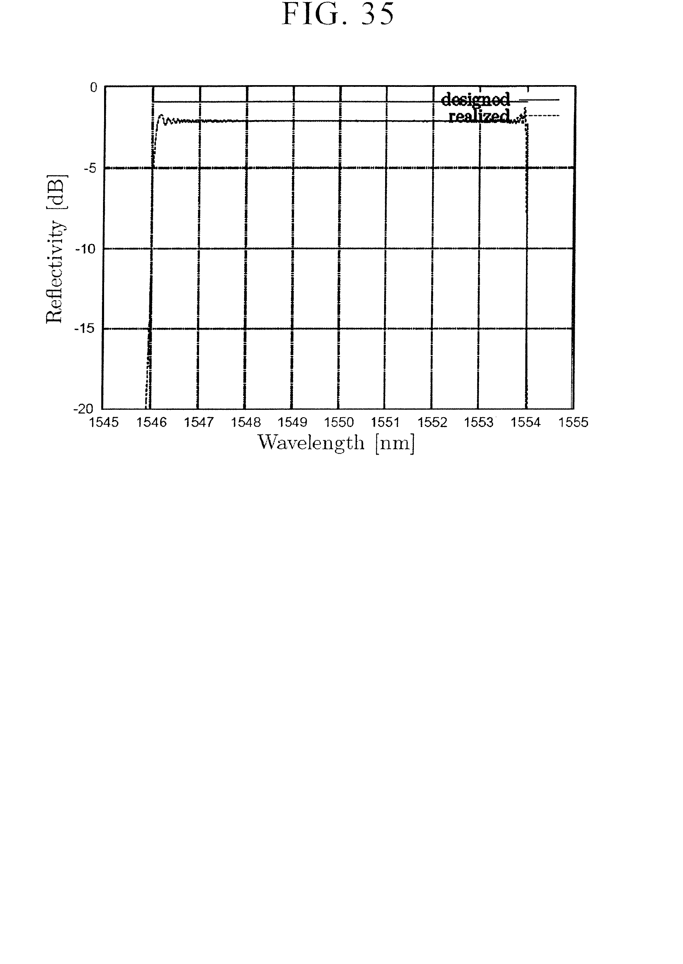

FIG. 33 is a graph showing a potential distribution of NPWG for a dispersion compensation device prepared according to this example. The horizontal axis of the graph expresses positions that are standardized by the central wavelength of 1550 nm. Using this potential, the group delay characteristics shown in FIG 34 and the reflective index characteristics shown in FIG. 35 are obtained. In both figures, the spectrum data used in design (designed) and the spectrum data that are obtained (realized) are shown.

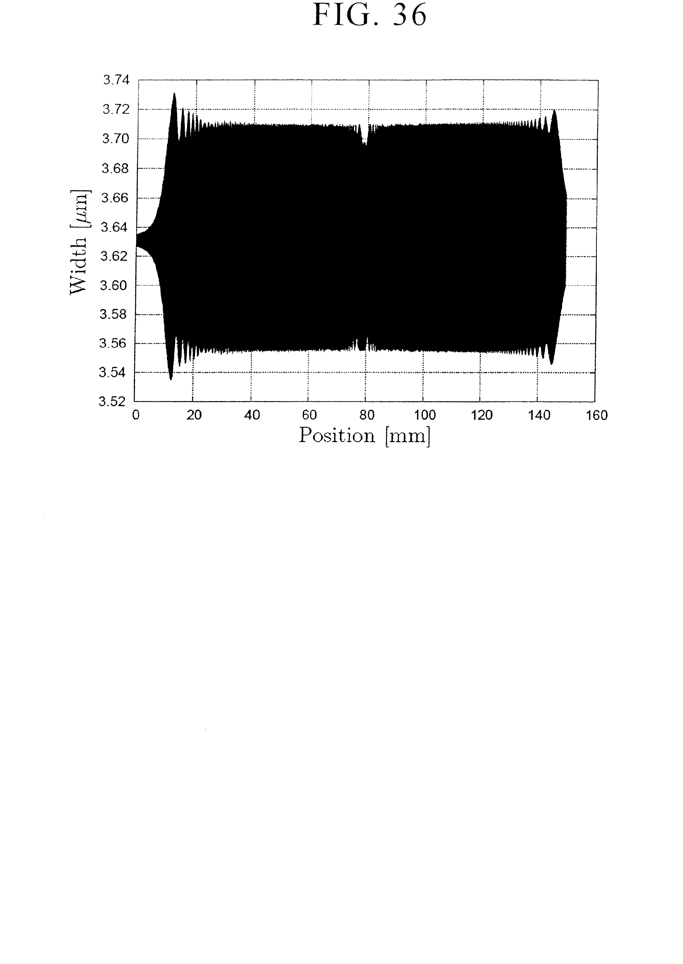

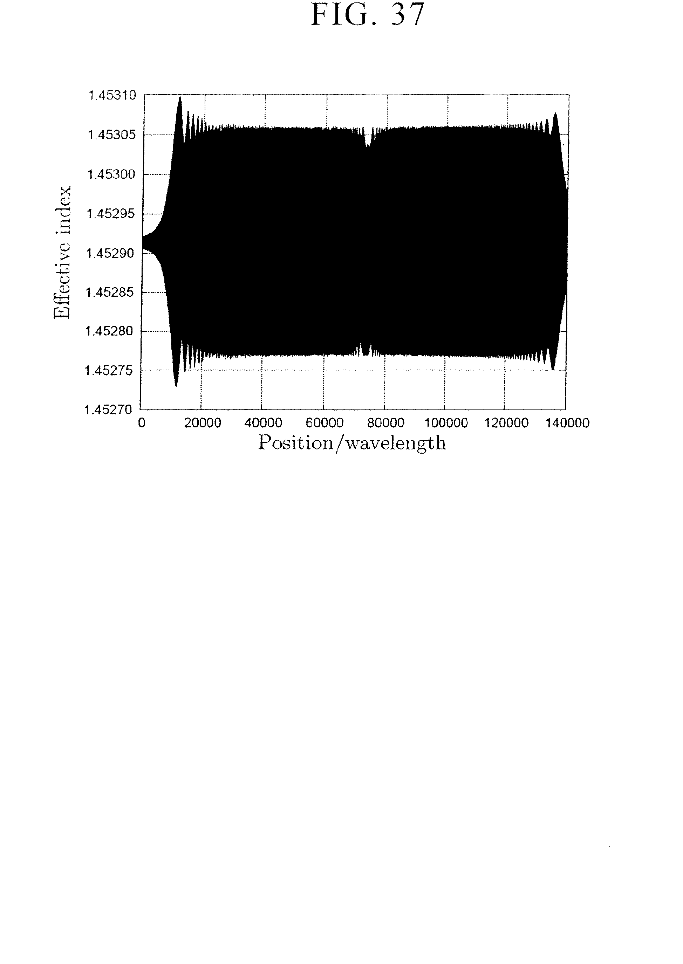

The NPWG according to this example is configured as a waveguide structure in which a core having a height $h_3$ = 6 $\mu$m and a relative refractive index difference $\Delta$= 0.6% is embedded in a cladding formed from pure quartz glass. In this waveguide structure, the core width distribution of the NPWG realizing the characteristics shown in FIG. 34 and FIG. 35 is shown in FIG. 36. The distribution of the equivalent refractive index of the NPWG at this time is shown in FIG. 37.

[Example 7]

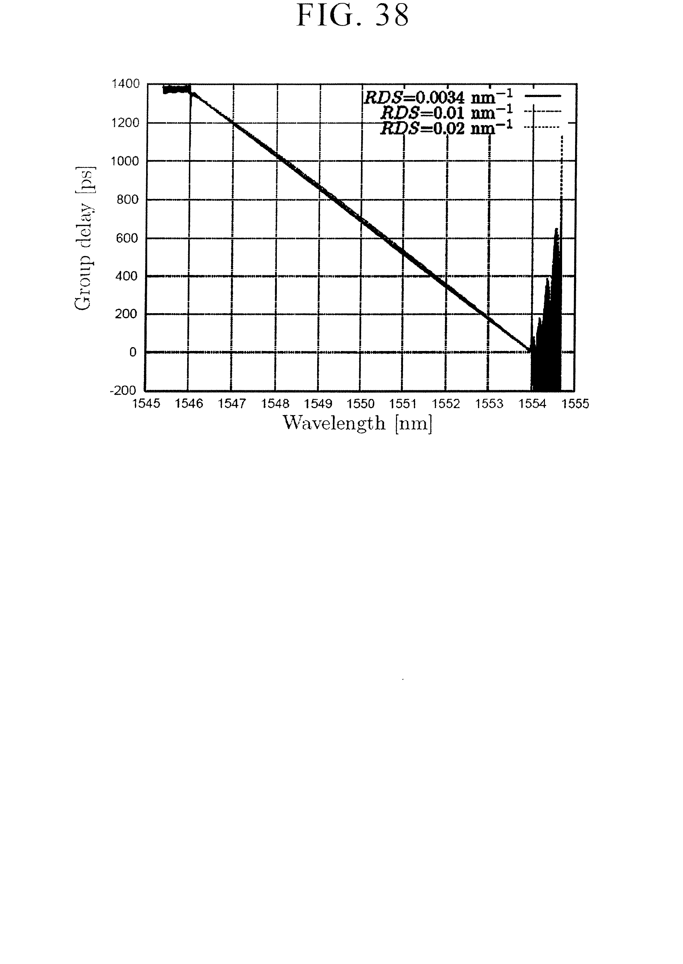

A dispersion compensation device was designed that realizes compensation of wavelength dispersion when varying the relative dispersion slope RDS varies relative to the dispersion and fixing a dispersion amount D = -170 ps/nm in a wavelength region [1546 nm- 1554 nm]. FIG. 38 shows group delay characteristics when RDS takes values of 0.0034 nm$^{-1}$, 0.01 nm$^{-1}$, and 0.02 nm$^{-1}$. As shown in FIG. 38, the same group delay characteristics are observed even when the value for RDS is varied.

[Example 8]

A dispersion compensation device was designed that realizes compensation of wavelength dispersion in which the dispersion amount D = 200 ps/nm, and the relative dispersion slope RDS = 0.03 mn$^{-1}$ in the wavelength region [1299.6 nm - 1300.4 nm]. In this example, compensation for wavelength dispersion is enabled for an S-SMF having a length of approximately 100 km.

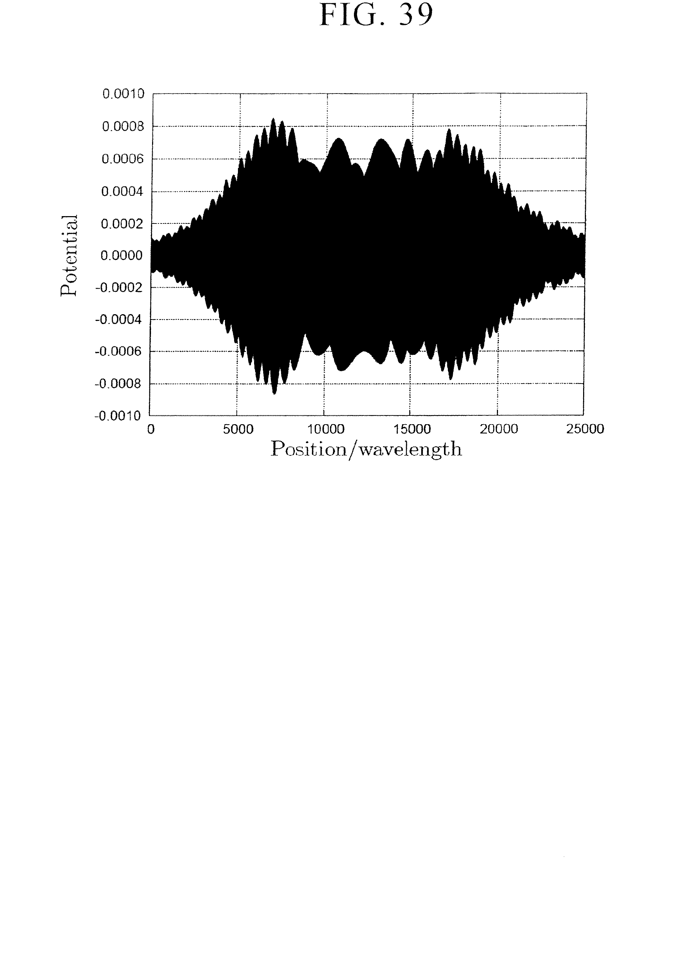

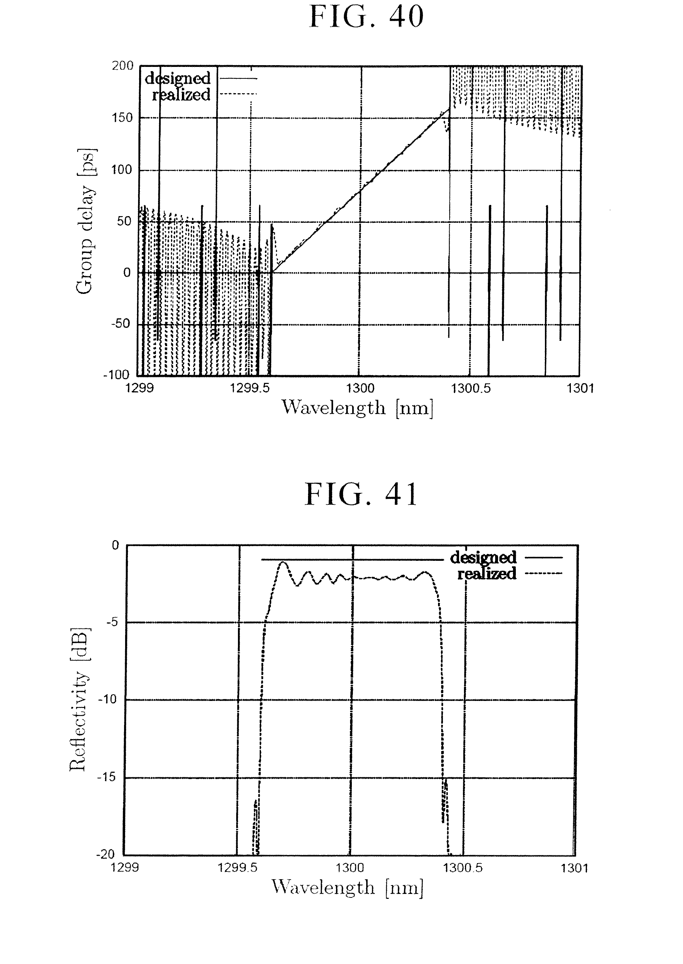

FIG. 39 is a graph showing a potential distribution of NPWG for a dispersion compensation device prepared according to this example. The horizontal axis of the graph expresses positions that are standardized by the central wavelength of 1550 nm. Using this potential, the group delay characteristics shown in FIG. 40 and the reflective index characteristics shown in FIG. 41 are obtained. In both figures, the spectrum data used in design (designed) and the spectrum data that are obtained (realized) are shown.

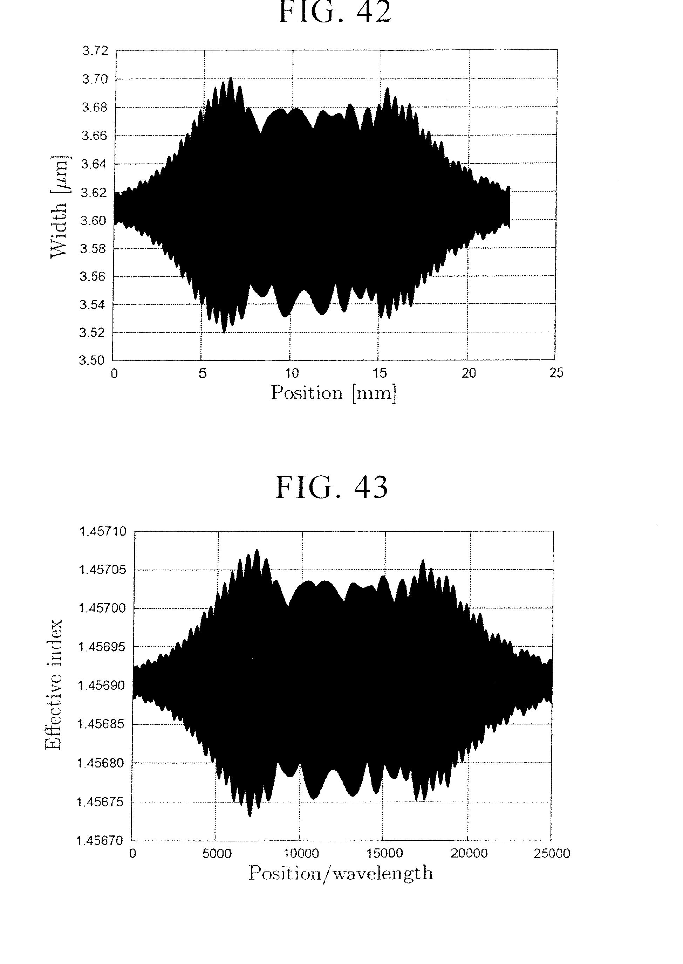

The NPWG according to this example is configured as a waveguide structure in which a core having a height $h_3$ = 6 $\mu$m and a relative refractive index difference $\Delta$= 0.6% is embedded in a cladding formed from pure quartz glass. In this waveguide structure, the core width distribution of the NPWG realizing the characteristics shown in FIG. 40 and FIG. 41 is shown in FIG. 42. The distribution of the equivalent refractive index of the NPWG at this time is shown in FIG. 43.

[Example 9]

A dispersion compensation device was designed that realizes compensation of wavelength dispersion in which the dispersion amount D = -1400 ps/nm, and the relative dispersion slope RDS = 0.005 nm$^{-1}$ in the wavelength region [1499.6 nm-1500.4 nm]. In this example, compensation for wavelength dispersion is enabled for an S-SMF having a length of approximately 100 km.

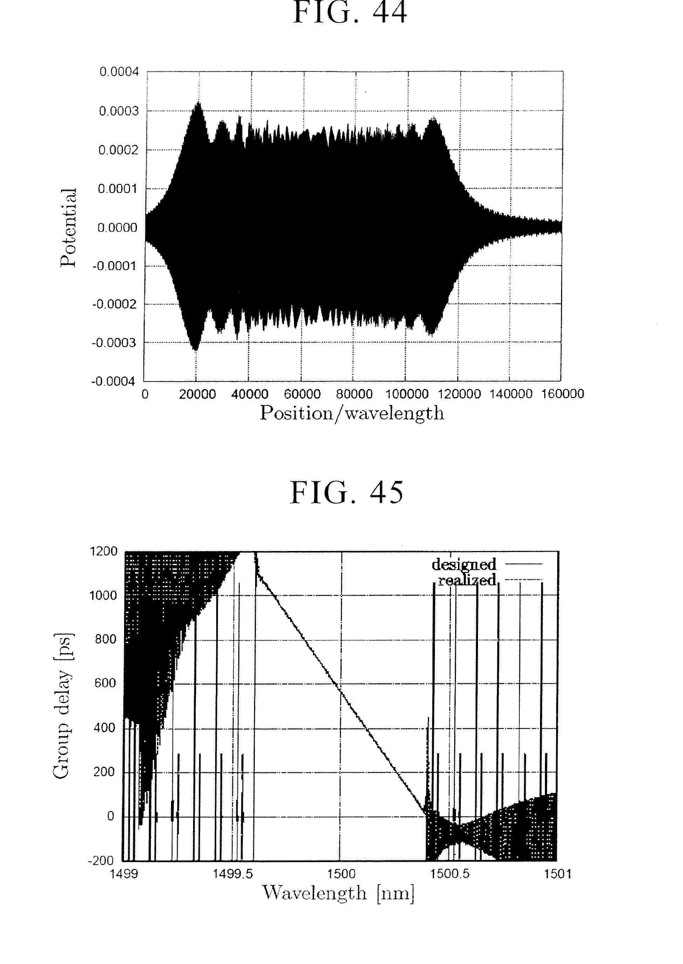

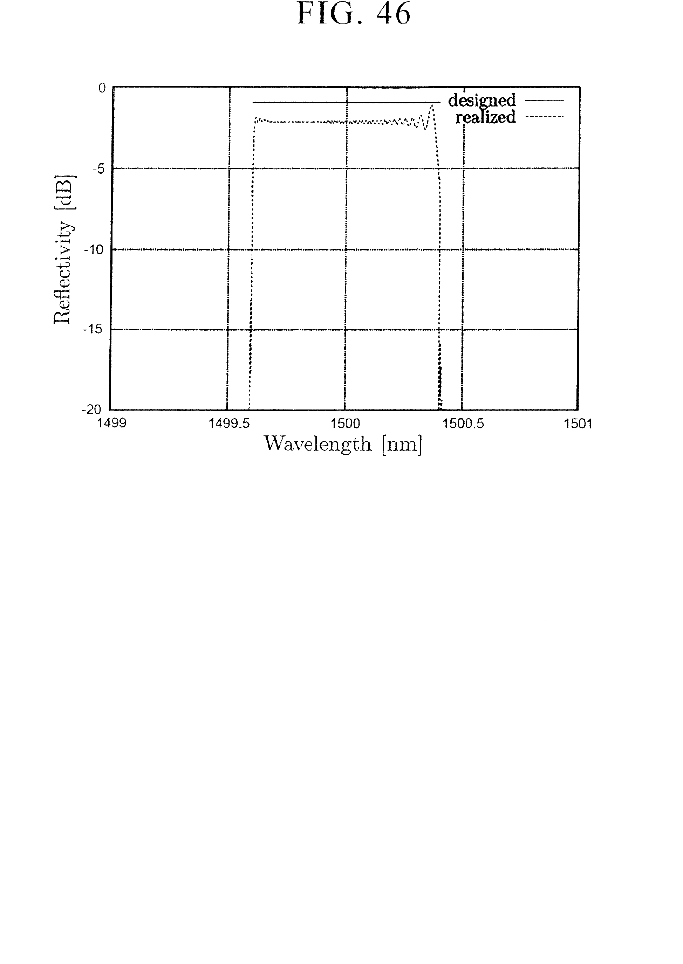

FIG. 44 is a graph showing a potential distribution of NPWG for a dispersion compensation device prepared according to this example. The horizontal axis of the graph expresses positions that are standardized by the central wavelength of 1550 nm. Using this potential, the group delay characteristics shown in FIG. 45 and the reflective index characteristics shown in FIG. 46 are obtained. In both figures, the spectrum data used in design (designed) and the spectrum data that are obtained (realized) are shown.

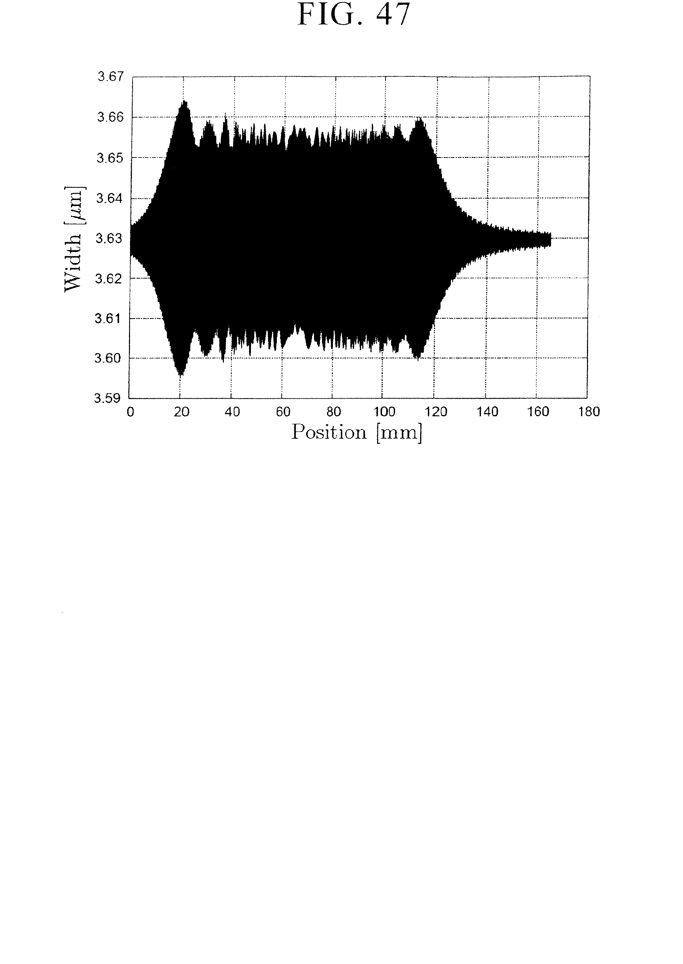

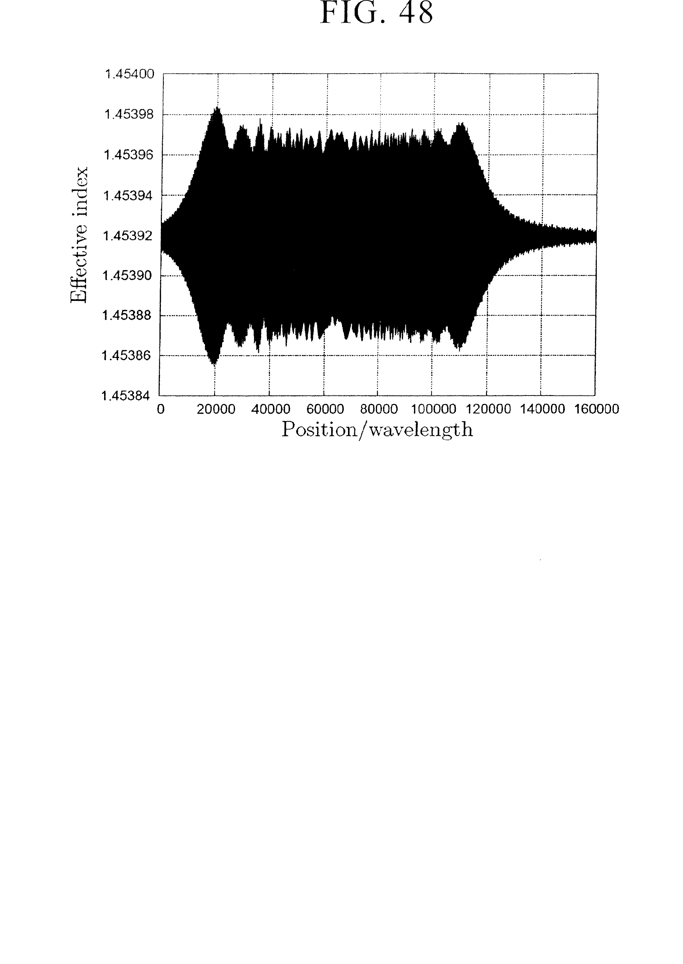

The NPWG according to this example is configured as a waveguide structure in which a core having a height $h_3$ = 6 $\mu$m and a relative refractive index difference $\Delta$= 0.6% is embedded in a cladding formed from pure quartz glass. In this waveguide structure, the core width distribution of the NPWG realizing the characteristics shown in FIG. 45 and FIG. 46 is shown in FIG. 47. The distribution of the equivalent refractive index of the NPWG at this time is shown in FIG. 48.

[Example 10]

A dispersion compensation device was designed that realizes compensation of wavelength dispersion in which the dispersion amount D = -2000 ps/nm, and the relative dispersion slope RDS = 0.0025 nm$^{-1}$ in the wavelength region [1599.6 nm - 1600.4 nm]. In this example, compensation for wavelength dispersion is enabled for an S-SMF having a length of approximately 100 km.

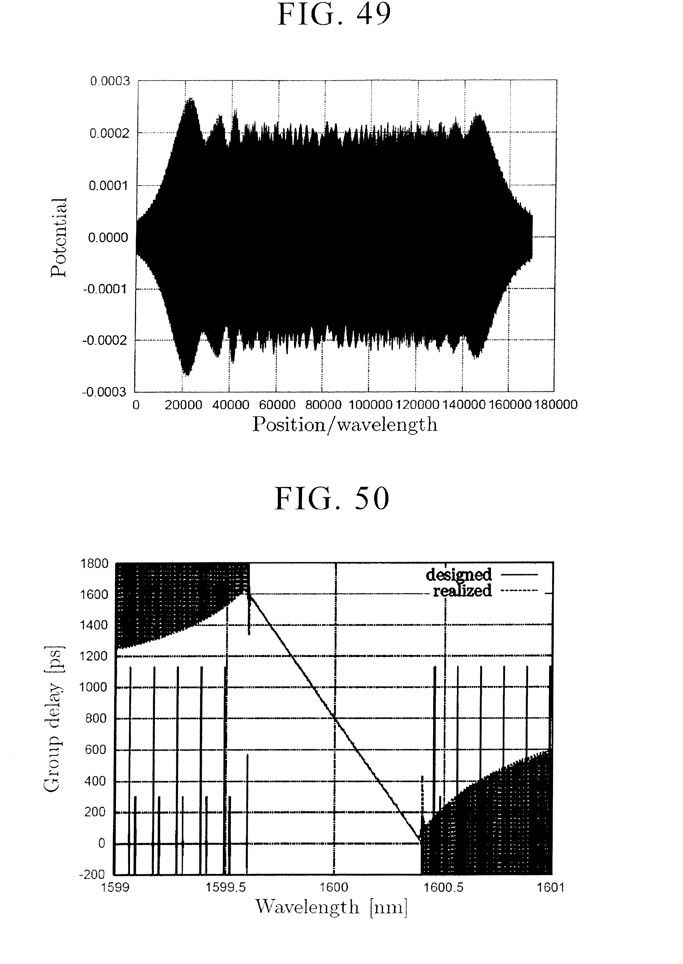

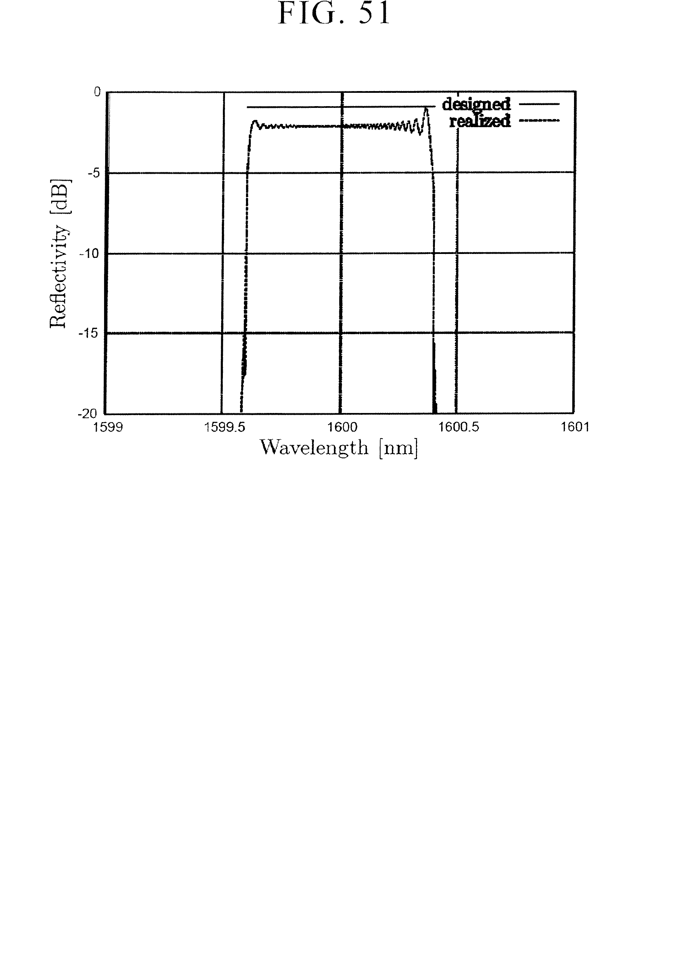

FIG. 49 is a graph showing a potential distribution of NPWG for a dispersion compensation device prepared according to this example. The horizontal axis of the graph expresses positions that are standardized by the central wavelength of 1550 nm. Using this potential, the group delay characteristics shown in FIG. 50 and the reflective index characteristics shown in FIG. 51 are obtained. In both figures, the spectrum data used in design (designed) and the spectrum data that are obtained (realized) are shown.

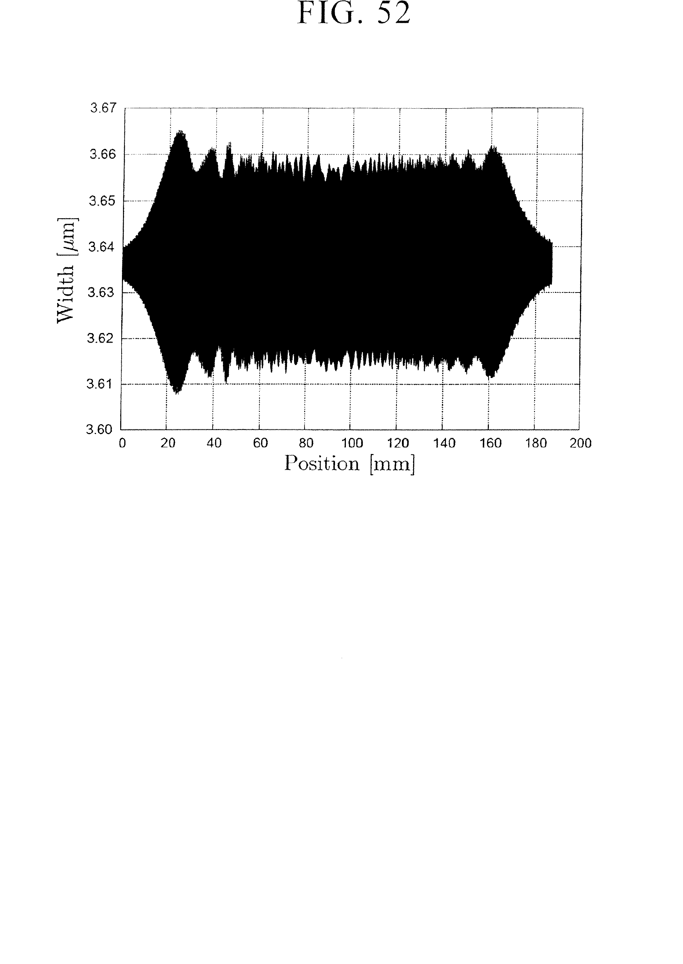

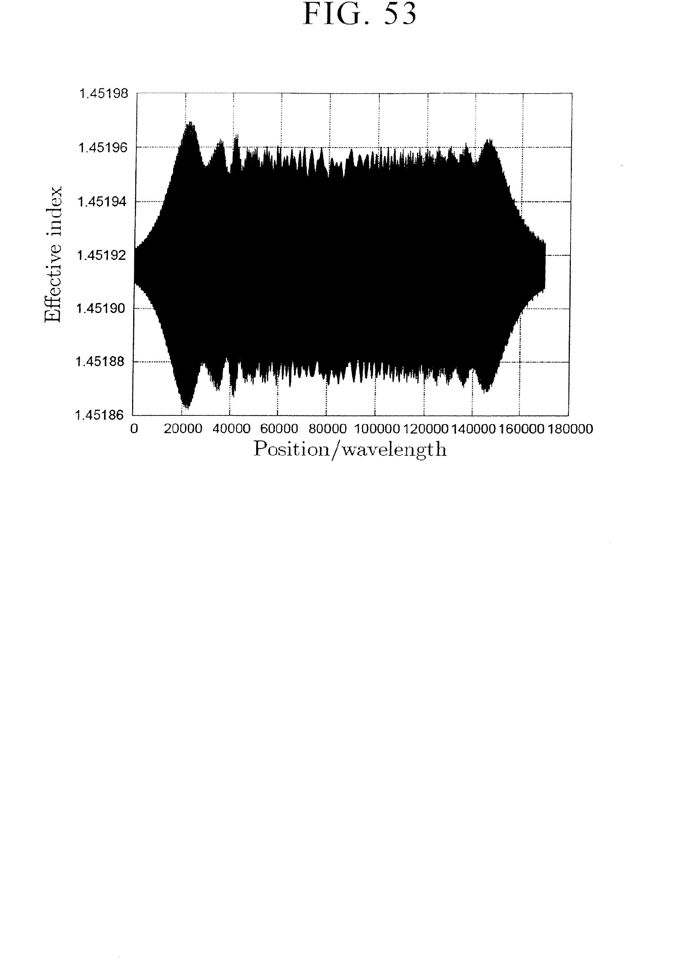

The NPWG according to this example is configured as a waveguide structure in which a core having a height $h_3$ = 6 $\mu$m and a relative refractive index difference $\Delta$= 0.6% is embedded in a cladding formed from pure quartz glass. In this waveguide structure, the core width distribution of the NPWG realizing the characteristics shown in FIG. 50 and FIG. 51 is shown in FIG. 52. The distribution of the equivalent refractive index of the NPWG at this time is shown in FIG. 53.

[Example 11]

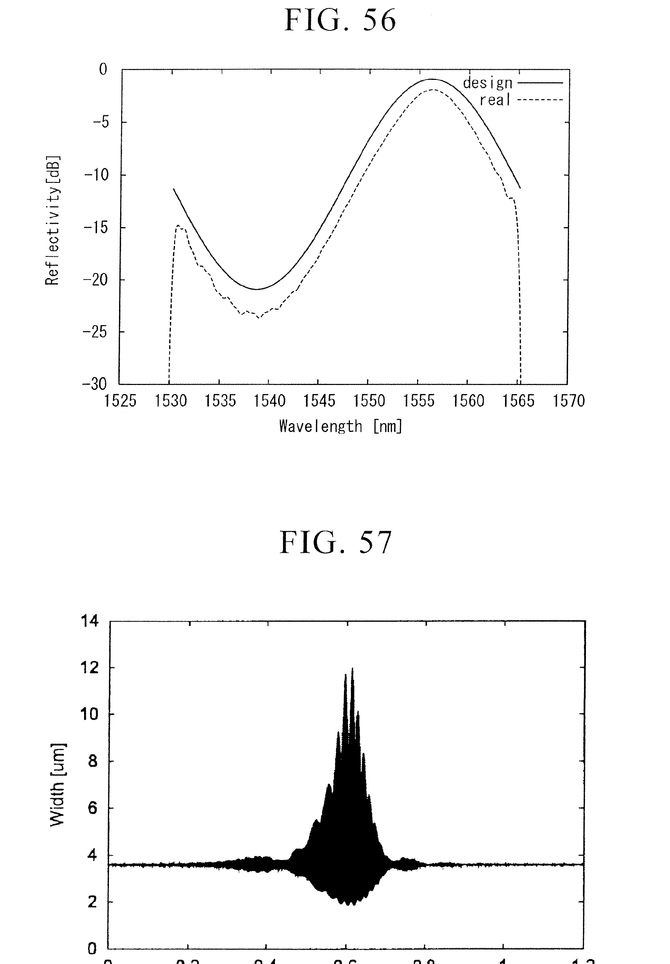

A gain equalizer was designed that have a wavelength dependency for the gain to be compensated of 20dB in the wavelength region [1530 nm, 1565 nm]. The shape of the gain is a sine wave. The designed spectrum data is shown in Fig. 56.

The NPWG according to this example is configured as a waveguide structure in which a core having a height $h_3$ = 6 $\mu$m and a relative refractive index difference $\Delta$= 0.6% is embedded in a cladding formed from quartz glass. In this waveguide structure, the core width distribution of the NPWG has a large variable-width distribution region in the center of the light propagation direction as shown in FIG. 57. Using this NPWG having this width distribution, the spectrum data (real) shown in FIG. 56 are obtained.

[Example 12]

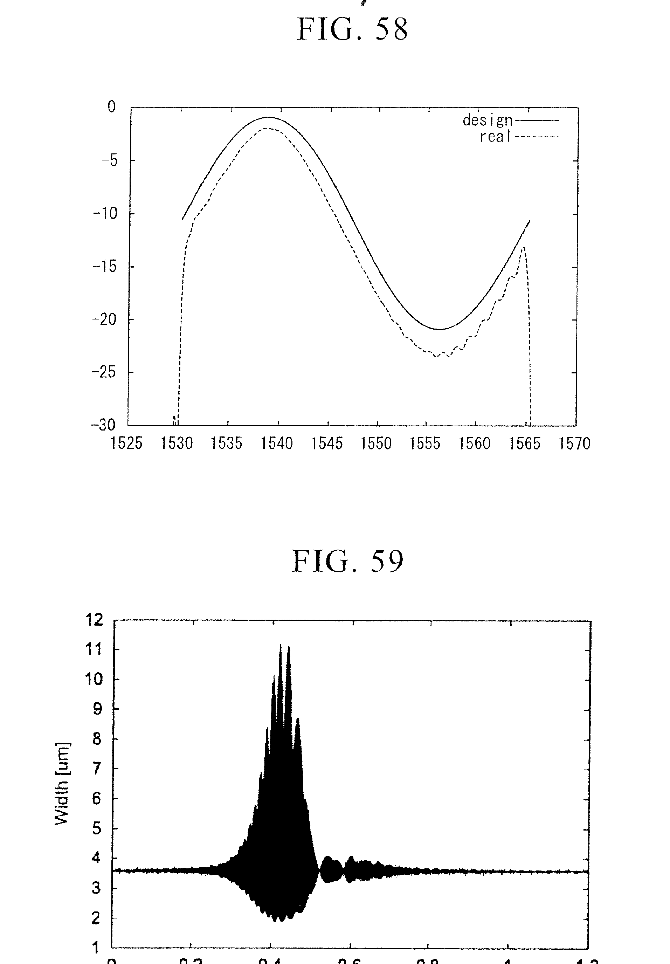

A gain equalizer was designed that have a wavelength dependency for the gain to be compensated of 20dB in the wavelength region [1530 nm, 1565 nm]. The shape of the gain is assumed to be the opposite of the shape of the example 11. The designed spectrum data is shown in FIG. 58.

The NPWG according to this example is configured as a waveguide structure in which a core having a height

$h_3$ = 6 $\mu$m and a relative refractive index difference $\Delta$= 0.6% is embedded in a cladding formed from quartz glass. In this waveguide structure, the core width distribution of the NPWG has a large variable-width distribution region from the center of the light propagation direction slightly towards the light entry direction as shown in FIG. 59. Using this NPWG having this width distribution, the spectrum data (real) shown in FIG. 58 are obtained.

As shown in FIG. 56 and FIG. 58, it has been confirmed that use of a gain equalizer according to examples 11 - 12 including the NPWG according to the present invention enables flattening of gain having a wavelength of 1530 nm - 1565 nm irrespective of the shape of the gain.

[Example 13]

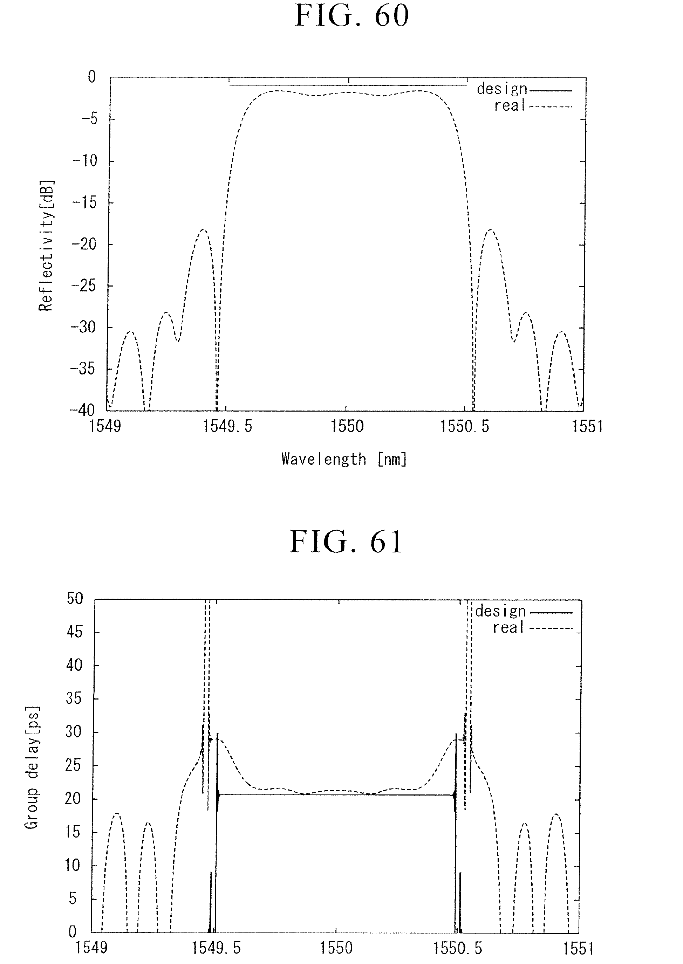

A filter was designed that reflect only a signal in the wavelength region [1545.5 nm, 1550.5 nm]. The designed spectrum data used in designing is shown in FIG. 60. FIG. 61 shows the designed group delay characteristics at that time. As shown in FIG. 61, the group delay is flattened (has a linear phase).

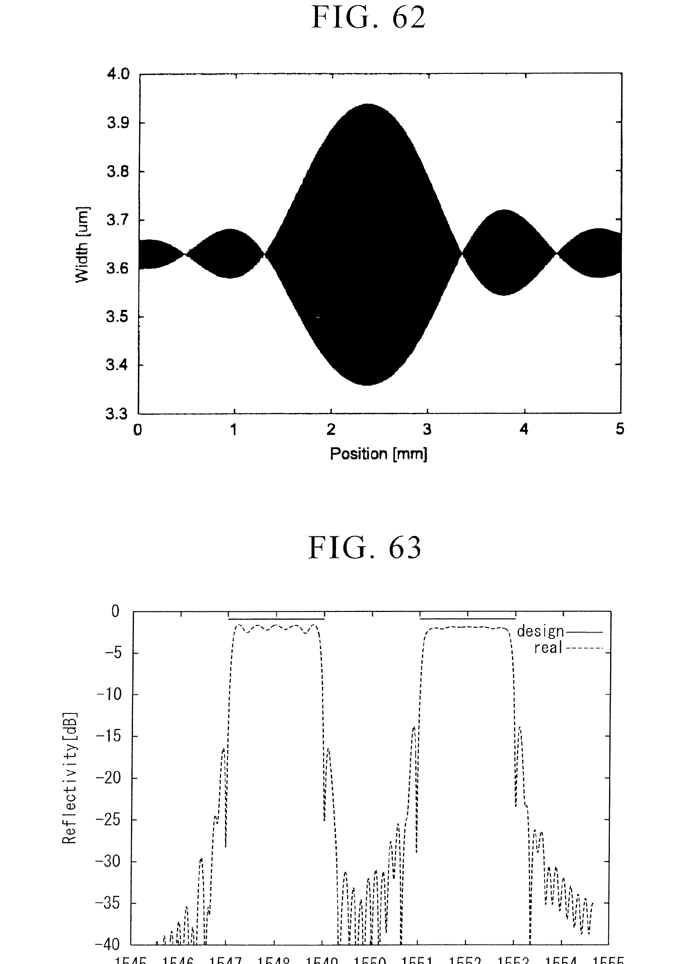

The NPWG according to this example is configured as a waveguide structure in which a core having a height $h_3$ = 6 $\mu$m and a relative refractive index difference $\Delta$= 0.6% is embedded in a cladding formed from quartz glass. In this waveguide structure, the core width distribution of the NPWG realizing the characteristics shown in FIG. 60 and FIG. 61 is shown in FIG. 62. An NPWG having this width distribution obtains the real spectrum data as shown in FIG. 60 and the real group delay characteristics as shown in FIG. 61.

[Example 14]

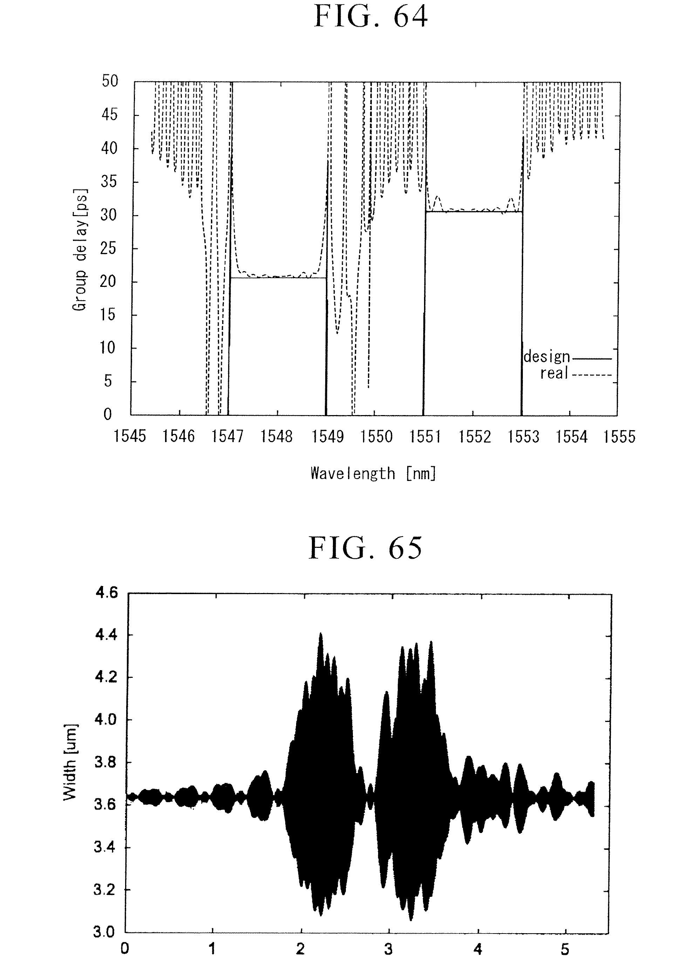

A filter bank was designed that reflect only two channels of signals in a wavelength band [1547 nm, 1549 nm] and a wavelength band [1551 nm, 1553 nm]. The designed spectrum data are shown in FIG. 63 and the designed group delay characteristics are shown in FIG. 64. The group delay characteristics are designed so that the group delay of the two channels deviates at 10 ps. As shown in FIG. 64, the group delay is flat within the channel (has a linear phase).

The NPWG according to this example is configured as a waveguide structure in which a core having a height $h_3$ = 6 $\mu$m and a relative refractive index difference $\Delta$= 0.6% is embedded in a cladding formed from quartz glass. In this waveguide structure, the core width distribution of the NPWG realizing the characteristics shown in FIG. 63 and FIG. 64 is shown in FIG. 65. In this example, the reflection center of the waveguide is located in a different position in response to the deviation of the group delay between the channels when designed. As a result, as shown in FIG. 65, the regions in which the width of the core 11 undergoes a large change mutually deviate.

As a result, concentration of the reflection center on a single point can be prevented, the rate of change of the width of the core 11 can be prevented from increasing. An NPWG having this width distribution obtains the real spectrum data as shown in FIG. 63 and the real group delay characteristics as shown in FIG. 64.

[Example 15]

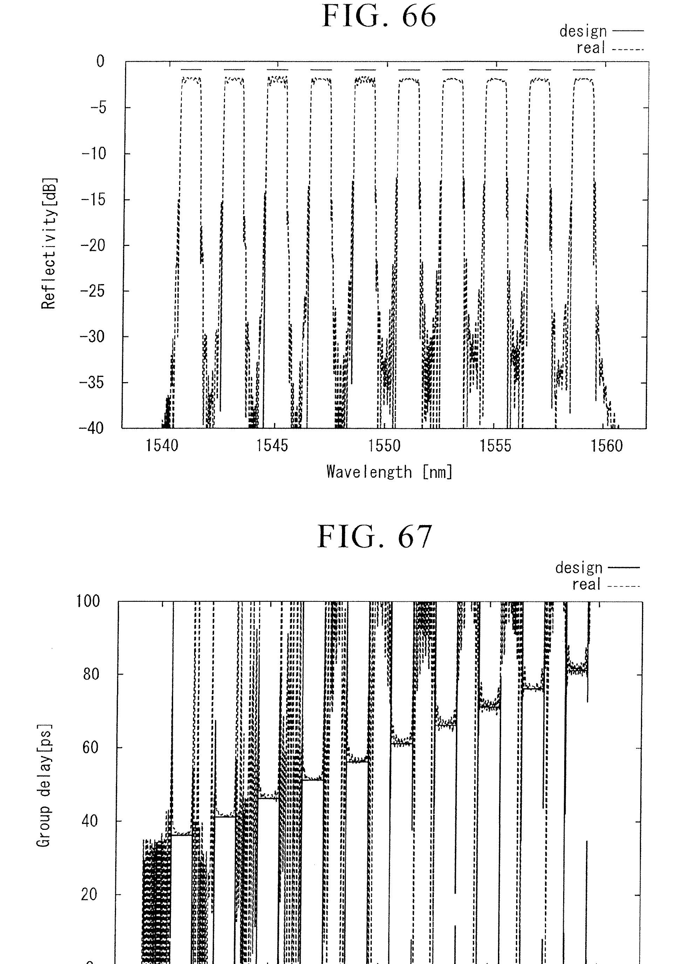

A filter bank was designed that reflect only signals in ten channels in a passband of 1 nm and in a wavelength band [1540.5 nm, 1559.5 nm]. The interval between the channels is 1 nm. The designed spectrum data are shown in FIG. 66 and the designed group delay characteristics are shown in FIG. 67. The group delay characteristics are designed so that the group delay of the ten channels deviates at 5 ps. As shown in FIG. 67, the group delay is flat within the channel (has a linear phase).

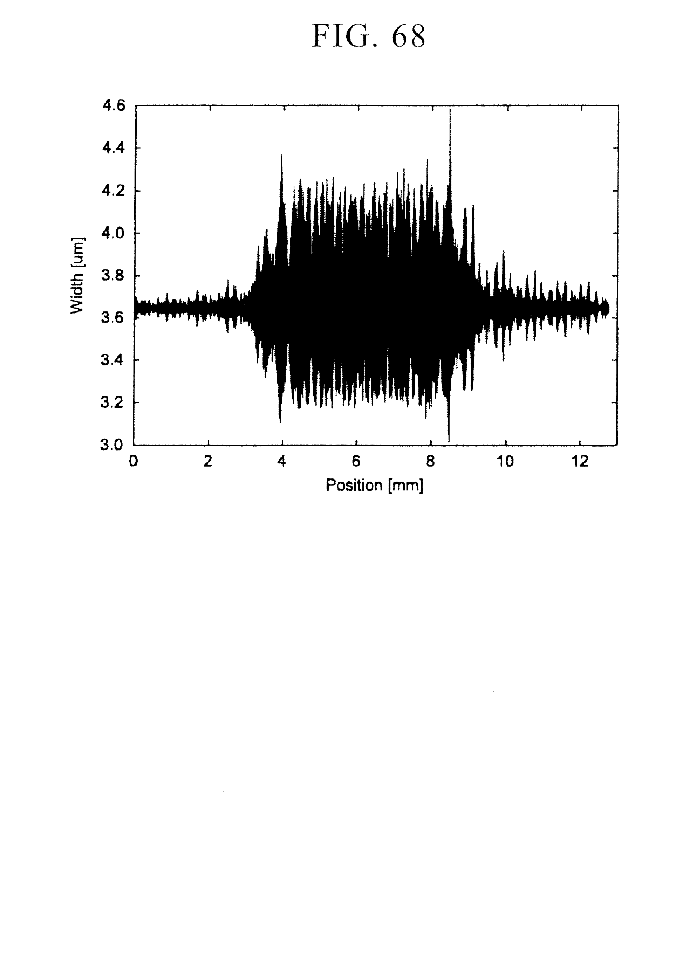

The NPWG according to this example is configured as a waveguide structure in which a core having a height $h_3$ = 6 $\mu$m and a relative refractive index difference $\Delta$= 0.6% is embedded in a cladding formed from quartz glass. In this waveguide structure, the core width distribution of the NPWG realizing the characteristics shown in FIG. 66 and FIG. 67 is shown in FIG. 68. In this example, the reflection center of the waveguide is located in a different position in response to the deviation of the group delay between the channels when designed. As a result, as shown in FIG. 68, the regions in which the width of the core undergoes a large change mutually deviate. Therefore concentration of the reflection center on a single point can be prevented, the rate of change of the width of the core 11 can be prevented from increasing. An NPWG having this width distribution obtains the real spectrum data as shown in FIG. 66 and the real group delay characteristics as shown in FIG. 67.

As respectively shown in FIG. 60 - FIG. 61, FIG. 63 - FIG. 64 and FIG. 66 - FIG. 67, it has been confirmed that a filter according to examples 13 to 15 using an NPWG according to the present invention enables superior filtering of a plurality of channels in a wide band.

[Industrial Applicability]

An optical waveguide according to the present invention includes a cladding and a core embedded in the cladding. Variation of the physical dimensions of the core enables the equivalent refractive index to vary in a nonuniform manner over the light propagating direction.

**Claims**

1.  An optical waveguide comprising a cladding and a core embedded in the cladding, wherein:

    an equivalent refractive index of the core changes unevenly along a light propagation direction by changing physical dimensions of the core.

2.  The optical waveguide according to claim 1, wherein:

    a width of the core is unevenly distributed along the light propagation direction.

3.  The optical waveguide according to claim 2, wherein:

    the width of the core is unevenly distributed along the light propagation direction so that both sides in the width direction of the core become symmetrical from a center of the core.

4.  The optical waveguide according to claim 2, wherein:

    the width of the core is unevenly distributed along the light propagation direction so that both sides in the width direction of the core become asymmetrical from a center of the core.

5.  The optical waveguide according to claim 2, wherein:

    the width of the core being unevenly distributed along the light propagation direction on one side only among both sides in the width direction of the core from a center of the core.

6.  The optical waveguide according to claim 1, wherein
    the core is provided in a linear manner.

7.  The optical waveguide according to claim 1, wherein
    the core is provided in a meandering manner.

8.  The optical waveguide according to claim 1, wherein:

    an equivalent refractive index distribution of the core along the light propagation direction of the waveguide is designed by a design method, the design method comprises:

    solving an inverse scattering problem that numerically derives a potential function from the spectrum data of a reflection coefficient using a Zakharov-Shabat equation; and
    estimating a potential for realizing a desired reflection spectrum from a value obtained by the inverse scattering problem.

9.  The optical waveguide according to claim 8, wherein:

    the equivalent refractive index distribution of the core along the light propagation direction of the waveguide is designed by:

    reducing to a Zakharov-Shabat equation having a potential that is derived from a differential of a logarithm of the equivalent refractive index of the optical waveguide, using a wave equation that introduces a variable of the amplitude of the electric power wave that propagates at the front and rear of the optical waveguide, and solving as an inverse scattering problem that numerically derives a potential function from spectrum data of a reflection coefficient;
    estimating a potential for realizing a desired reflection spectrum from a value obtained by the inverse scattering problem;

finding the equivalent refractive index based on the potential; and

calculating a width distribution of the core along the light propagating direction of the optical waveguide from the relationship between a predetermined thickness of the core, the equivalent refractive index, and the dimensions of the core that are found in advance.

10. An optical device comprising an optical waveguide according to claim 1, wherein:

one end of the optical waveguide is a transmitting end, and the other end of the optical waveguide is a reflecting end;

the transmitting end is terminated with a non-reflecting end; and

the optical output is taken out via a circulator or a directional coupler at the reflecting end.

11. The optical device according to claim 10, wherein:

the optical device is an optical waveguide-type wavelength dispersion compensation device.

12. The optical device according to claim 11, wherein:

the optical waveguide has a characteristic in which, with a central wavelength $\lambda_C$ in a range of 1280 nm $\leq \lambda_C \leq$ 1320 nm and 1490 nm $\leq \lambda_C \leq$ 1613 nm, and an operating band $\Delta ABW$ in the range of 0.1 nm $\leq \Delta BW \leq$ 40 nm, a dispersion (D) is in a range of -1,500 ps/nm $\leq D \leq$ 2,000 ps/nm, and a relative dispersion slope (RDS) is in a range of -0.1 nm$^{-1}$ $\leq$ RDS $\leq$ 0.1 nm$^{-1}$.

13. The optical device according to claim 10, wherein the optical device is a gain equalizer.

14. The optical device according to claim 10, wherein the optical device is a filter.

15. The optical device according to claim 14, wherein:

the optical waveguide is divided into a plurality of channels, and light in a desired wavelength band is reflected by each channel.

16. The optical device according to claim 15, wherein a group delay differs for each channel.

17. A method for manufacturing an optical waveguide according to claim 1, the method comprises:

providing a lower cladding layer of an optical waveguide;

providing a core layer with a refractive index that is greater than the lower cladding layer on the lower cladding layer;

forming the core by applying a processing that, in the core layer, leaves a predetermined core shape designed so that an equivalent refractive index of the core changes unevenly along a light propagation direction and removes the other portions; and

providing an upper cladding layer to cover the core.

# FIG. 1

## FIG. 2A

## FIG. 2B

## FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

# FIG. 16

# FIG. 17

# FIG. 18

# FIG. 19

# FIG. 20

# FIG. 21

# FIG. 22

# FIG. 23

# FIG. 24

# FIG. 25

# FIG. 26

# FIG. 27

# FIG. 28

# FIG. 29

# FIG. 30

# FIG. 31

# FIG. 32

# FIG. 33

# FIG. 34

# FIG. 35

# FIG. 36

# FIG. 37

# FIG. 38

# FIG. 39

# FIG. 40

# FIG. 41

# FIG. 42

# FIG. 43

# FIG. 44

# FIG. 45

# FIG. 46

# FIG. 47

# FIG. 48

# FIG. 49

# FIG. 50

# FIG. 51

# FIG. 52

# FIG. 53

# FIG. 54

# FIG. 55

# FIG. 56

# FIG. 57

FIG. 58

FIG. 59

EP 2 226 659 A1

# FIG. 60

# FIG. 61

62

# FIG. 62

# FIG. 63

# FIG. 64

# FIG. 65

# FIG. 66

design ——
real ------

# FIG. 67

design ——
real ------

# FIG. 68

## INTERNATIONAL SEARCH REPORT

| International application No. |
|---|
| PCT/JP2008/073312 |

A. CLASSIFICATION OF SUBJECT MATTER
*G02B6/122*(2006.01)i

According to International Patent Classification (IPC) or to both national classification and IPC

B. FIELDS SEARCHED

Minimum documentation searched (classification system followed by classification symbols)
G02B6/12-6/14

Documentation searched other than minimum documentation to the extent that such documents are included in the fields searched
Jitsuyo Shinan Koho         1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)
JSTPlus(JDreamII), JST7580(JDreamII)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-77665 A (Fujikura Ltd.),<br>11 March, 2004 (11.03.04),<br>Claims 1 to 6; Par. Nos. [0008] to [0029];<br>Figs. 1 to 16<br>(Family: none) | 1-7,17<br>8-16 |
| Y | Ghie-Hugh Song et al., Design of corrugated waveguide filters by the Gel'fand-Levitan-Marchenko inverse-scattering method, J. Opt. Soc. Am. A, 1985.11, Vol.2, No.11, pp.1905-1915 | 8,9 |
| Y | JP 2000-221338 A (Mitsubishi Electric Corp.),<br>11 August, 2000 (11.08.00),<br>Par. Nos. [0039] to [0042], [0078] to [0080], [0085] to [0095]; Figs. 1, 13, 14<br>(Family: none) | 10-16 |

[X] Further documents are listed in the continuation of Box C.   [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>28 January, 2009 (28.01.09) | Date of mailing of the international search report<br>10 February, 2009 (10.02.09) |
|---|---|
| Name and mailing address of the ISA/<br>Japanese Patent Office | Authorized officer |
| Facsimile No. | Telephone No. |

Form PCT/ISA/210 (second sheet) (April 2007)

| INTERNATIONAL SEARCH REPORT | International application No. |
|---|---|
| | PCT/JP2008/073312 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2001-53680 A (Fujikura Ltd.), 23 February, 2001 (23.02.01), Par. No. [0029]; Fig. 7 (Family: none) | 10-16 |
| A | Gia-Wei Chern et al., Analysis and design of almost-periodic vertical-grating-assisted codirectional coupler filters with nonuniform duty ratios, APPLIED OPTICS, 2000.09.01, Vol.39, No.25 | 1-17 |

Form PCT/ISA/210 (continuation of second sheet) (April 2007)

## REFERENCES CITED IN THE DESCRIPTION

### Patent documents cited in the description

- JP 2007331004 A
- JP 3857211 B
- JP 3819264 B
- JP 2004325549 A
- JP 3852409 B
- JP 2005275101 A

### Non-patent literature cited in the description

- **K. Takiguchi.** Dispersion slope equalizer for dispersion shifted fiber using a lattice-form programmable optical filter on a planar lightwave circuit. *J. Lightwave Technol.,* 1998, vol. 16 (9), 1647-1656
- **H. Masuda.** Design and spectral characteristics of gain- flattened tellurite-based fiber Raman amplifies. *J. Lightwave Technol.,* 2006, vol. 24 (1), 504-515
- **K. Morishita.** Fused fiber couplers made insensitive by the glass structure change. *J. Lightwave Technol.,* 2008, vol. 26 (13), 1915-1920
- **J. E. Sipe ; L. Poladian ; C. Martijn de Sterke.** Propagation through nonuniform grating structures. *J. Opt. Soc. Am. A,* 1994, vol. 11 (4), 1307-1320
- **P. V. Frangos ; D. L. Jaggard.** A numerical solution to the Zakharov-Shabat inverse scattering problem. *IEEE Trans. Antennas and Propag.,* 1991, vol. 39 (1), 74-79